(19) Europäisches Patentamt
European Patent Office
Office européen des brevets

(11) EP 4 113 158 B1

(12) **EUROPEAN PATENT SPECIFICATION**

(45) Date of publication and mention of the grant of the patent:
**12.11.2025 Bulletin 2025/46**

(21) Application number: **22179844.0**

(22) Date of filing: **20.06.2022**

(51) International Patent Classification (IPC):
***G01S 7/41*** *(2006.01)* ***G01S 13/90*** *(2006.01)*

(52) Cooperative Patent Classification (CPC):
**G01S 7/415; G01S 7/417; G01S 13/9023**

(54) **SYSTEM FOR DETERMINING THE PRIORITY OF INSPECTION OF SATELLITE REMOTELY SENSED OBJECTS AND METHOD THEREOF**

SYSTEM ZUR BESTIMMUNG DER PRIORITÄT DER INSPEKTION VON DURCH SATELLITEN FERNERKUNDETEN OBJEKTEN UND VERFAHREN DAZU

SYSTÈME DE DÉTERMINATION DE LA PRIORITÉ D'INSPECTION D'OBJETS TÉLÉDÉTECTÉS PAR SATELLITE ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2021 EP 21181986**

(43) Date of publication of application:
**04.01.2023 Bulletin 2023/01**

(73) Proprietor: **Planetek Italia S.r.l.**
**70132 Bari (IT)**

(72) Inventors:
- **AIELLO, Antonello**
  **70132 BARI (IT)**
- **MASSIMI, Vincenzo**
  **70132 BARI (IT)**
- **SAMARELLI, Sergio**
  **70132 BARI (IT)**

(74) Representative: **Praxi Intellectual Property Milano**
**Via Mario Pagano, 69/A**
**20145 Milano (IT)**

(56) References cited:
**CN-A- 109 991 601**

- **PEDUTO DARIO ET AL: "Empirical fragility and vulnerability curves for buildings exposed to slow-moving landslides at medium and large scales", LANDSLIDES, SPRINGER BERLIN HEIDELBERG, BERLIN/HEIDELBERG, vol. 14, no. 6, 13 April 2017 (2017-04-13), pages 1993 - 2007, XP036373065, ISSN: 1612-510X, [retrieved on 20170413], DOI: 10.1007/S10346-017-0826-7**
- **NAPPO NICOLETTA ET AL: "Slow-moving landslides interacting with the road network: Analysis of damage using ancillary data, in situ surveys and multi-source monitoring data", ENGINEERING GEOLOGY, ELSEVIER SCIENCE PUBLISHERS, AMSTERDAM, NL, vol. 260, 30 July 2019 (2019-07-30), XP085872964, ISSN: 0013-7952, [retrieved on 20190730], DOI: 10.1016/J.ENGGEO.2019.105244**
- **PRATESI FABIO ET AL: "Rating health and stability of engineering structures via classification indexes of InSAR Persistent Scatterers", INTERNATIONAL JOURNAL OF APPLIED EARTH OBSERVATION ANDGEOINFORMATION, ELSEVIER, AMSTERDAM, NL, vol. 40, 22 April 2015 (2015-04-22), pages 81 - 90, XP029217791, ISSN: 0303-2434, DOI: 10.1016/J.JAG.2015.04.012**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- PEDUTO D ET AL: "Analysis of Damage to Buildings in Urban Centers on Unstable Slopes via TerraSAR-X PSI Data: The Case Study of El Papiol Town (Spain)", IEEE GEOSCIENCE AND REMOTE SENSING LETTERS, IEEE, USA, vol. 16, no. 11, 1 November 2019 (2019-11-01), pages 1706 - 1710, XP011756150, ISSN: 1545-598X, [retrieved on 20191030], DOI: 10.1109/LGRS.2019.2907557
- AMODIO ANGELO ET AL: "Rheticus Network Alert supporting critical infrastructures: a case study for ACEA - utility operator - within SCIRES project", 12� THEMED REMOTE SENSING WORKSHOP - THE ROLE OF COPERNICUS SENTINEL DATA IN KNOWLEDGE PROCESSES AND LAND MANAGEMENT: STATE OF THE ART OF TECHNOLOGY TRANSFER TO THE OPERATIONAL SECTOR - EXTENDED ABSTRACTS, 25 June 2019 (2019-06-25), pages 1 - 69, XP055971540, ISBN: 978-88-82863-77-7, Retrieved from the Internet <URL:https://www.enea.it/it/seguici/pubblicazioni/pdf-volumi/2019/atti_ait_2019_extended-abstracts.pdf> [retrieved on 20221014]

## Description

TECHNICAL FIELD OF THE INVENTION

The present invention relates to a system and a relative method, for determining the priority of inspection of objects on the earth's surface by using multi-temporal interferometry measurements of satellite SAR data. These objects can be part of the natural environment such as territories, or they can be man-made objects such as linear infrastructures (e.g. water sewer networks, transportations infrastructures), point infrastructures (e.g. electrical towers), polygonal infrastructures (e.g. buildings, settling tanks of wastewater of a treatment plant).

STATE OF THE ART

Land instability represents a serious source of danger for citizens safety, infrastructure safeguarding and environmental protection. Under the pressure of anthropogenic activities and climate change, the intensity and frequency of land instability phenomena are faster growing than before. As calamitous events, land instability phenomena can cause human injury, loss of life and economic resources, and damage facilities, properties and/or infrastructures, increased costs and delays to new developments.

The management of critical infrastructures (e.g. water and sewer networks, transportations infrastructures, electrical towers, private and public buildings, historical heritage, etc.) and urbanised territory is a complex and expensive task for multi-utility companies, operators and public entities, which are in need of ensuring the correct and safe functionality of crucial assets, as well as the safety of citizens. Multi-utility companies, operators and public entities spend a lot of financial resources maintaining their assets. Right now, policies are strictly oriented to recovery assets in case of disruption due to major problems.

Identifying high concern-level (or pre-critical) portions of infrastructures or territory before critical situations occur is a challenge.

Traditional campaigns for the regular monitoring of wide areas and infrastructures require considerable financial resources and time and are often complex to implement. The use of remotely-sensed data can overcome these limitations and provide frequent, accurate and accessible information thanks to the wide availability of spatial information. Remotely-sensed territories and infrastructure movements can be measured with millimetric accuracy by processing SAR (Synthetic Aperture RADAR) images. It is possible, indeed, to measure the distance between the sensor and the target over time, recording the time elapsed between the electromagnetic wave emission and the backscattered signal's reception. The comparison of distances measured over time allows the computation of territories or infrastructure displacements with millimetric precision. This technique is known as "multi-temporal interferometry" and can produce measures that can be widely used to identify which are the infrastructures that are affected by out of normal movements.

At the current state of art, the ground motion maps obtained as output of the multi-temporal interferometry are visually examined by operators that decide on the basis of their acquired knowledge and their experience if a given area is worthy of field inspection of not. This type of approach can be complex, time-demanding and easily subject to errors. SAR data can be acquired with a global coverage 24/7 and under any weather condition. Hence, remotely-sensed monitoring of territories and infrastructure displacements produces millions of measures over areas of few hundreds of square kilometres. As a consequence, making decisions over even localised portions of infrastructures or territory reveals to be a difficult task for which human interpretation shows evident limits. To this aim, some attempts have been done in the state of art, to develop tools for slow-moving territories and infrastructure consequence forecasting and for implementing risk mitigation strategies. *[*Peduto D et al, "Empirical fragility and vulnerability curves for buildings exposed to slow-moving landslides at medium and large scales", Landslides, Springer Berlin Heidelberg Berlin/Heidelberg, vol. 14, no.6, 13 April 2017*],* in particular, discloses a two-scale (medium and large) procedure for vulnerability assessment of buildings located in areas affected by slow-moving landslides. Intensity measures are derived from Differential Interferometric Synthetic Aperture Radar (DInSAR) satellite data analysis and based on Din-SAR-derived intensity parameters, fragility and vulnerability curves are generated for the exposed building in vulnerable areas. The operator can, then, decides if a building is worthy of inspection or not by empirically evaluating the obtained curves. In *[*Nappo N. et al. "Slow-moving landslides interacting with the road network: Analysis of damage using ancillary data, in situ surveys and multi-source monitoring data." Engineering Geology, Elsevier Science Publishers, Amsterdam, NL, vol. 260, 30 July 2019], instead, an analysis of road damage based on interferometry using persistent scatterers is described. More particularly, *[*Nappo N. et al. "Slow-moving landslides interacting with the road network: Analysis of damage using ancillary data, in situ surveys and multi-source monitoring data." Engineering Geology, Elsevier Science Publishers, Amsterdam, NL, vol. 260, 30 July 2019] discloses an existing correlation between the damage level and a differential displacement parameter. This differential displacement parameter is determined as the absolute value of the difference of the average absolute cumulative displacement in a circle on the road and in a larger circle comprising an area outside the road. The empirical use of the disclosed correlation of such differential parameter with the damage level is proposed as procedure to help road maintenance prioritization and scheduling as well as risk management. [Pratesi F. et al. "Rating health and stability of engineering structures via classification indexes of InSAR Persistent Scatterers", International Journal of Applied Earth Observation and Geoinformation, vol. 40, pages 81-90, 22 April 2015] discloses indexes derived from permanent scatterers for the evaluation of health of engineering structures based on persistent scatterers coverage, maximum velocity and a velocity distribution index that is function of maximum, minimum, and mean velocities and expresses the symmetry degree. Such indexes are, thus, colour coded and used as to determine the buildings requiring further investigation. CN109991601A describes how to determine the maximum settlement of a building and the slope/tilt of the settlement. More particularly, CN109991601A discloses the determination of breakpoints, periodic components and whether there is acceleration in the time series. Risk is empirically evaluated based on maximum settlement, maximum slope/tilt, the recent deformation rate and the acceleration of the deformation rate. Finally, [Peduto D et al, "Analysis of damage to buildings in urban centers on unstable slopes via TerraSAR-X PSI data: the case Study of El Papiol Town (Spain)", IEEE Geoscience and Remote Sensing Letters, vol. 16, no.111, 1 November 2019] describes how to determine vulnerability/fragility curves using differential settlements of buildings based on persistent scatterers. The use of fragility curves for prioritization of interventions and maintenance works is proposed. [Amodio Angelo et al, "Rheticus Network Alert supporting critical infrastructures: a case study for ACEA - utility operator - within SCIRES project", 12° Themed Remote Sensing Workshop - The role of Copernicus Sentinel data in knowledge processes and land management: state of art of technology processes and land management: state of the art of technology transfer to the operational sector - Extended abstracts, 25 June 2019 (2019-06-25), pages 1-69, XP055971540, ISBN: 978-88-82863-77-7] discloses the division of a network of pipes into segments and the determination for each segment of a class that corresponds to levels of concern for inspection based on measurements of the displacement of the segment itself as well as of the nearby areas measured by multitemporal interferometry PSI.

All the prior art approaches discussed above are all linked to human interpretations of the results of the several proposed analyses and, as such, are dependent on the operator's empirical decision that manually compares the present results with previously acquired data.

## OBJECTS AND SUMMARY OF THE INVENTION

The object of the present invention is, therefore, to provide a system that allows for automatically detecting pre-critical remotely-sensed movements of territories and infrastructure, so to proceed with the field inspection only of those portions of infrastructures or territories that are in pre-critical status, giving the precedence to those that are in a higher concern situation.

To this aim a system according to claim 1 is provided.

For the sake of the present description and, as known in the field, the "persistent scatterers", or PS, are single scatterers on the ground showing high temporal phase stability in the entire data stack and that are minimally affected by temporal and geometrical decorrelation.

The "distributed scatterers", o DS, are, instead, groups of different small scatterers on the ground showing constant reflection over time, with moderate coherence and medium-to-low signal-to-noise ratio, due to temporal and spatial decorrelation.

More particularly, the persistent scatterers correspond to artificial or natural elements existing on the Earth's surface, e.g., buildings, monuments, roadways, railways, antennas, electric towers or rocks, debris slopes. Their return signal (backscatter) is characterized by high stability over time. The radar can measure the distance between the sensor and the target every time it flies over it.

While the persistent scatterers have a high signal-to-noise ratio, the distributed scatterers have a medium-to-low signal-to-noise ratio. To be considered as a unique target, they have to be numerous and close to each other, and they have to exhibit the same backscatter signal.

Preferably, the interimage coherence can be calculated, as not limiting example, as the sum over the images of the residual between actual and modelled phase trends, the model phase being the sum of all the contributions due to APS (Atmospheric Phase Screen), DEM (Digital Elevetion Model) error, and displacement. [Bovenga, Fabio & Refice, Alberto & Nutricato, Raffaele & Guerriero, Luciano & Chiaradia, Mt. (2005). SPINUA: a flexible processing chain for ERS/ENVISAT long term interferometry. Proceedings of ESA-ENVISAT Symposium, Salzburg, Austria. 6-10]. Hence, the coherence is, directly connected to persistent and distributed scatterers quality: the higher the coherence, the lower the uncertainty of the measured backscatter signal. For this reason and as further detailed below, the coherence value for each of the persistent scatterers and/or distributed scatterers was processed to obtain a normalized value of the same and used for selecting only the scatterers having high signal reliability.

The risk classes may be:

- high risk, if the score is higher than an upper score threshold;
- intermediate risk, if the score is comprised between a lower score threshold and the upper score threshold; and
- low risk, if the score is lower than the lower score threshold.

The displaying information can, thus, comprise displaying the scores and/or the risk classes of each unit.

Color mapping of the scores or the risk classes of each unit on satellite images of the object can also be part of the displaying information.

In an example not according to the invention, the score can be calculated for the displacement measurements derived from multi-temporal interferometry measurements of satellite SAR data acquired in both ascending and descending mode. In this case, i.e. when data of both types of acquiring mode are employed, the calculating the score, described above, can be replicated for ascending mode and descending mode data, so as to obtain for each unit, a first score, resulting from SAR data acquired in ascending mode, and a second score, resulting from SAR data acquired in descending mode. In this example according to the invention, the calculating the score, therefore, will further comprise:

- comparing, for each unit, the first score and the second score;
- calculating, for each unit, a final score, the final score being equal to the first score, if the first score is higher than the second score, and to the second score, if the second score is higher than the first score.

The processing of determining the priority of inspection of each unit will be based on the final score and comprise ranking the final scores of the units and/or classifying the units based on the final scores in one of the following risk classes:

- high risk, if the final score is higher than a upper final score threshold;
- intermediate risk, if the final score is comprised between a lower final score threshold and the upper final score threshold; and
- low risk, if the final score is lower than the lower final score threshold.

Consequently, in this example not according to the invention the displaying information will comprise displaying the final scores and/or the risk classes of each unit. Color mapping the final scores or the risk classes of each unit on satellite images of the object will also be part of the displaying information.

A second object of the present invention is, then, to provide a method that allows for detecting pre-critical remotely-sensed movements of territories and infrastructure, so to proceed with the field inspection only of those portions of infrastructures or territories that are in pre-critical status, giving the precedence to those that are in a higher concern situation.

To this aim a method according to claim 17 is provided.

In an example not according to the invention, when data of both types of acquiring mode are employed, the calculating the score, described above, can be replicated for ascending mode and descending mode data, so as to obtain for each unit, a first score, resulting from SAR data acquired in ascending mode, and a second score, resulting from SAR data acquired in descending mode.

In this example not according to the invention, the calculating the score, therefore, will further comprise:

- comparing, for each unit, the first score and the second score;
- calculating, for each unit, a final score, the final score being equal to the first score, if the first score is higher than the second score, and to the second score, if the second score is higher than the first score.

In this case not according to the invention, the step of processing of determining the priority of inspection of each unit based on the score comprise ranking the final scores of the units and/or classifying the units based on the final scores and the step of displaying information can comprise displaying and or color mapping the final scores and/or the risk classes of each unit.

## BRIEF DESCRIPTION OF THE DRAWINGS

The following description refers to the accompanying drawings, in which:

- Figure 1 is a very high-resolution satellite image showing a linear infrastructure on which the elementary units are shown as superimposed to said image;
- Figure 2 is a very high-resolution satellite image showing a point infrastructure on which the elementary units are shown as superimposed to said image;
- Figure 3 is a very high-resolution satellite image showing a polygonal infrastructure on which the elementary units are shown as superimposed to said image; and
- Figure 4 is a very high-resolution image of a territory on which the elementary units are shown as superimposed to said image.

## DETAILED DESCRIPTION OF THE INVENTION

Referring to Figure 1, a first embodiment of the system of the present invention is specifically designed for determining the priority of inspection of the portions of a linear infrastructure (e.g. water networks, sewer networks, roadways, railways, etc.).

The first embodiment of the system of the present invention comprising an arithmetic device that is configured to execute:

- processing of importing displacement measurement data derived from multi-temporal interferometry measurements of satellite SAR data over the linear infrastructure to be monitored;
- processing of importing at least one information data record about the linear infrastructure, said information data being selected from the group consisting of:

location, geometry, material, size, age, topology, function, past failures, service levels, traffic data;

- processing of subdividing the linear infrastructure into a plurality of elementary units (1, 1', 1"), each of said unit (1, 1', 1") comprising a plurality of persistent scatterers and/or distributed scatterers;
- calculating a coherence value for each of the persistent scatterers and/or distributed scatterers; and
- calculating a normalized coherence (NC) value for each of the persistent scatterers and/or distributed scatterers.

An elementary unit (1, 1', 1") is defined as is an area surrounding a segment of the infrastructure, the segment having a length comprised between 90 m and 110 and the area comprising all the scatterers having a linear distance from that segment comprised between 90 m or 110 m, or comprised between 10 m and 30 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where *Coh* is the coherence value of the scatterer and SC is the coherence threshold. If the coherence of that scatterer is lower than the coherence threshold (SC) and is different from the minimum coherence ($Coh_{min}$) of the scatterers inside the unit (1, 1', 1"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (1, 1', 1").

If the coherence value of that scatterer is zero, the normalized coherence (NC) is, then, given by the following equation:

$$NC = 0$$

Finally, if the coherence of that scatterer is equal to the coherence threshold (SC), the normalized coherence (NC) is, then, given by the following equation:

$$NC = 0.5$$

As known, the coherence threshold (SC) is computed by the multi-temporal interferometry analysis as the value obtained with a Monte Carlo simulation.

The arithmetic device is further configured to execute:

- processing of selecting the scatterers having a normalized coherence above a fixed threshold comprised between 0.4 and 0.6, thus obtaining a set of selected scatterers for each elementary unit (1, 1', 1");
- calculating at least a score for each elementary unit (1, 1', 1");
- determining the priority of inspection of each unit (1, 1', 1") by ranking the score of the units (1, 1', 1") and/or by classifying the units (1, 1', 1") based on the scores in risk classes; and
- processing of displaying information on the score of each unit (1, 1', 1") and/or a result of the determining of the priority of inspection on an output device.

The calculating at least a score for each elementary unit (1, 1', 1") comprises:

- calculating the velocity of each selected scatterer;
- calculating, for each unit (1, 1', 1"), a mean of the velocity selected scatterers inside the unit (1, 1', 1"), so as to obtain a velocity mean for each unit (1, 1', 1");
- calculating, for each unit (1, 1', 1") the absolute value of the difference between the velocity value of each selected scatterer inside the unit (1, 1', 1") and the velocity mean of each unit (1, 1', 1"), so as to obtain a velocity difference value for each selected scatterer;
- selecting the selected scatterers having the velocity difference value higher than a fixed threshold, thus obtaining a set of subselected scatterers for each elementary unit (1, 1', 1");
- calculating, for each unit (1, 1', 1"), a mean of the velocity difference values among the subselected scatterers inside the unit (1, 1', 1"), so as to obtain a velocity difference mean for each unit (1, 1', 1");
- calculating a maximum value of the velocity difference mean of the units (1, 1', 1"), thus obtaining a velocity difference mean maximum;
- dividing the velocity difference mean of each unit (1, 1', 1") by the velocity difference mean maximum, thus obtaining a velocity difference ratio;
- calculating a maximum value of the velocity means of the units (1, 1', 1"), thus obtaining a velocity mean maximum;
- dividing the velocity mean of each unit (1, 1', 1") by the velocity mean maximum, thus obtaining a velocity ratio;
- summing the velocity ratio and the velocity difference ratio, thus obtaining a sum value; and
- calculating a ratio between the sum value of the unit (1, 1', 1") and the maximum value of the sum value among the elementary units (1, 1', 1"), thus obtaining the score of the unit (1, 1', 1").

Alternatively to the velocity, other quantities can be used. For example, it can be used the product of the velocity of a given scatterer and the density of the selected scatterers inside the elementary unit (1, 1', 1") containing that scatterer.

The arithmetic device is configured to execute determining the priority of inspection of each unit (1, 1', 1") by classifying the units (1, 1', 1") based on the scores, by means of a neural network algorithm using the scores of the units (1, 1', 1") as input. The scores of the units (1, 1', 1") are calculated using the velocities or the scatterers and/or the product of the velocities of the scatterers per the density of the scatterers inside the unit (1, 1', 1"). The risk classes are:

- high risk, if the score is higher than an upper score threshold;
- intermediate risk, if the score is comprised between a lower score threshold and the upper score threshold; and
- low risk, if the score is lower than the lower score threshold.

Even the acceleration of the scatterers can be used as quantity on which calculate the scores. In this case, the calculating at least a score for each elementary unit (1, 1', 1") comprises:

- calculating the acceleration of each selected scatterer;
- calculating, for each unit (1, 1', 1"), a mean of the acceleration selected scatterers inside the unit (1, 1', 1"), so as to obtain an acceleration mean for each unit (1, 1', 1");
- calculating, for each unit (1, 1', 1") the absolute value of the difference between the acceleration value of each selected scatterer inside the unit (1, 1', 1") and the acceleration mean of each unit (1, 1', 1"), so as to obtain an acceleration difference value for each selected scatterer;
- selecting the selected scatterers having the acceleration difference value higher than a fixed threshold, thus obtaining a set of subselected scatterers for each elementary unit (1, 1', 1");
- calculating, for each unit (1, 1', 1"), a mean of the acceleration difference values among the subselected scatterers inside the unit (1, 1', 1"), so as to obtain an acceleration difference mean for each unit (1, 1', 1");
- calculating a maximum value of the acceleration difference mean of the units (1, 1', 1"), thus obtaining an acceleration difference mean maximum;
- dividing the acceleration difference mean of each unit (1, 1', 1") by the acceleration difference mean maximum, thus obtaining an acceleration difference ratio;
- calculating a maximum value of the acceleration means of the units (1, 1', 1"), thus obtaining an acceleration mean maximum;
- dividing the acceleration mean of each unit (1, 1', 1") by the acceleration mean maximum, thus obtaining an acceleration ratio;
- summing the acceleration ratio and the acceleration difference ratio, thus obtaining a sum value; and
- calculating a ratio between the sum value of the unit (1, 1', 1") and the maximum value of the sum value among the elementary units (1, 1', 1"), thus obtaining the score of the unit (1, 1', 1").

The scores obtained by using acceleration is used alone in the processing of determining the priority of inspection or, in examples not according to the invention, can be used in combination with the scores obtained by using the velocity and/or the scores obtained by using the product between the density and the velocity.

In the first case, the processing of determining the priority of inspection of each unit (1, 1', 1") based on the score comprises ranking the scores of the units (1, 1', 1") and classifying the units (1, 1', 1"), said scores being calculated on the basis of the acceleration.

In the second case, which is not according to the invention, the processing of determining the priority of inspection comprises comparing, for each unit (1, 1', 1"), the score obtained by using the acceleration, the score calculated on the basis of the velocity and the score obtained by using the product of the density and the velocity.

For each unit (1, 1', 1"), a final score, is then selected as the score that is greater among the three calculated scores (acceleration, velocity, product of density and velocity, density per acceleration) and the ranking is performed on the final score. Moreover, also a fourth type of scores on the basis the product of the density and the acceleration can be calculated and compared with the others.

In this case not according to the invention, the arithmetic device can, therefore, execute the step of classifying by means of a neural network algorithm using simultaneously all the types of scores as inputs. Moreover, as previously mentioned, in examples not according to the invention all the proposed scores (based on velocity, product of density and velocity, acceleration and product of density and acceleration) can be calculated for the displacement measurements derived from multi-temporal interferometry measurements of satellite SAR data acquired in both ascending and descending mode.

When only one score per unit (1, 1', 1") was calculated because only one quantity was used, said quantity being chosen among velocity, acceleration, density per velocity and density per acceleration, the calculating the score can be replicated for ascending mode and descending mode data, so as to obtain for each unit (1, 1', 1"), a first score, resulting from SAR data acquired in ascending mode, and a second score, resulting from SAR data acquired in descending mode. In this example not according to the invention, the calculating the score, therefore, will further comprise:

- comparing, for each unit (1, 1', 1"), the first score and the second score;

- calculating, for each unit (1, 1', 1"), a final score, the final score being equal to the first score, if the first score is higher than the second score, and to the second score, if the second score is higher than the first score.

When more than one score per unit (1, 1', 1") was calculated, because at least two quantities were used, said quantities being chosen among velocity, acceleration, density per velocity and density per acceleration, the calculating the score can be replicated for ascending mode and descending mode data, so as to obtain for each unit (1, 1', 1") and for each quantity, a first score, resulting from SAR data acquired in ascending mode and being calculated on the basis of said quantity, said quantity being chosen among velocity, acceleration, density per velocity and density per acceleration, and a second score, resulting from SAR data acquired in descending mode and being calculated on the basis of said quantity. In this example not according to the invention, the calculating the score, therefore, will further comprise:

- comparing, for each unit (1, 1', 1"), the first score and the second score; and
- calculating, for each unit, a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or the risk classes of each unit (1, 1', 1"). The displaying information can comprise also the color mapping the scores and/or the risk classes of each unit (1, 1', 1") on satellite images of the linear infrastructure.

Referring to Figure 1, a first embodiment of the method of the present invention, is designed for determining the priority of inspection of the portions of a linear infrastructure (e.g. water networks, sewer networks, roadways, railways, and comprises all the steps executed by the arithmetic device of the first embodiment of the system of the present invention.

Referring to Figure 2, a second embodiment of the system of the present invention is specifically designed for determining the priority of inspection of the portions of a polygonal infrastructure (e.g. buildings, settling tanks of wastewater of a treatment plant, etc.).

The second embodiment of the system of the present invention comprising an arithmetic device that is configured to execute:

- processing of importing displacement measurement data derived from multi-temporal interferometry measurements of satellite SAR data over the polygonal infrastructure to be monitored;
- processing of importing at least one information data record about the polygonal infrastructure, said information data being selected from the group consisting of: location, geometry, material, size, age, topology, function, geology, geomorphology, digital elevation model, slope and aspect;
- processing of subdividing the polygonal infrastructure into a plurality of elementary units (2, 2', 2"), each of said unit (2, 2', 2") comprising a plurality of persistent scatterers and/or distributed scatterers;
- calculating a coherence value for each of the persistent scatterers and/or distributed scatterers; and
- calculating a normalized coherence (NC) value for each of the persistent scatterers and/or distributed scatterers.

An elementary unit (2, 2', 2") is defined as is an area surrounding a polygon ofthe infrastructure, the area comprising all the scatterers having a linear distance from that segment comprised between 90 m or 110 m, or comprised between 10 m and 30 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where *Coh* is the coherence value of the scatterer and SC is the coherence threshold. If the coherence of that scatterer is lower than the coherence threshold (SC) and is different from the minimum coherence ($Coh_{min}$) of the scatterers inside the unit (2, 2', 2"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (2, 2', 2").

If the coherence value of that scatterer is zero, the normalized coherence (NC) is, then, given by the following equation:

$$NC = 0$$

Finally, if the coherence of that scatterer is equal to the coherence threshold (SC), the normalized coherence (NC) is, then, given by the following equation:

$$NC = 0.5$$

The coherence threshold (SC) is computed by the multi-temporal interferometry analysis as the value obtained with a Monte Carlo simulation.

The arithmetic device that is further configured to execute:

- processing of selecting the scatterers having a normalized coherence above a fixed threshold comprised between 0.4 and 0.6, thus obtaining a set of selected scatterers for each elementary unit (2, 2', 2");
- calculating at least a score for each elementary unit (2, 2', 2");
- determining the priority of inspection of each unit (2, 2', 2") by ranking the score of the units (2, 2', 2") and/or by classifying the units (2, 2', 2") based on the scores in risk classes; and
- processing of displaying information on the score of each unit (2, 2', 2") and/or a result of the determining of the priority of inspection on an output device.

The calculating at least a score for each elementary unit (2, 2', 2") comprises:

- calculating the velocity of each selected scatterer;
- calculating, for each unit (2, 2', 2"), a mean of the velocity selected scatterers inside the unit (2, 2', 2"), so as to obtain a velocity mean for each unit (2, 2', 2");
- calculating, for each unit (2, 2', 2") the absolute value of the difference between the velocity value of each selected scatterer inside the unit (2, 2', 2") and the velocity mean of each unit (2, 2', 2"), so as to obtain a velocity value for each selected scatterer;
- selecting the selected scatterers having the velocity difference value higher than a fixed threshold, thus obtaining a set of subselected scatterers for each elementary unit (2, 2', 2");
- calculating, for each unit (2, 2', 2"), a mean of the velocity difference values among the subselected scatterers inside the unit (2, 2', 2"), so as to obtain a velocity difference mean for each unit (2, 2', 2");
- calculating a maximum value of the velocity difference mean of the units (2, 2', 2"), thus obtaining a velocity difference mean maximum;
- dividing the velocity difference mean of each unit (2, 2', 2") by the velocity difference mean maximum, thus obtaining a velocity difference ratio;
- calculating a maximum value of the velocity means of the units (2, 2', 2"), thus obtaining a velocity mean maximum;
- dividing the velocity mean of each unit (2, 2', 2") by the velocity mean maximum, thus obtaining a velocity ratio;
- summing the velocity ratio and the velocity difference ratio, thus obtaining a sum value; and
- calculating a ratio between the sum value of the unit (2, 2', 2") and the maximum value of the sum value among the elementary units (2, 2', 2"), thus obtaining the score of the unit (2, 2', 2").

Alternatively to the velocity, other quantities can be used. For example, the acceleration of the scatterers can be used as quantity, on the basis of which calculate the scores. In this case, the calculating at least a score for each elementary unit (2, 2', 2") comprises:

- calculating the acceleration of each selected scatterer;
- calculating, for each unit (2, 2', 2"), a mean of the acceleration selected scatterers inside the unit (2, 2', 2"), so as to obtain an acceleration mean for each unit (2, 2', 2");
- calculating, for each unit (2, 2', 2") the absolute value of the difference between the acceleration value of each selected scatterer inside the unit (2, 2', 2") and the acceleration mean of each unit (2, 2', 2"), so as to obtain an acceleration difference value for each selected scatterer;
- selecting the selected scatterers having the acceleration difference value higher than a fixed threshold, thus obtaining a set of subselected scatterers for each elementary unit (2, 2', 2");
- calculating, for each unit (2, 2', 2"), a mean of the acceleration difference values among the subselected scatterers inside the unit (2, 2', 2"), so as to obtain an acceleration difference mean for each unit (2, 2', 2");
- calculating a maximum value of the acceleration difference mean of the units (2, 2', 2"), thus obtaining an acceleration difference mean maximum;
- dividing the acceleration difference mean of each unit (2, 2', 2") by the acceleration difference mean maximum, thus obtaining an acceleration difference ratio;
- calculating a maximum value of the acceleration means of the units (2, 2', 2"), thus obtaining an acceleration mean maximum;
- dividing the acceleration mean of each unit (2, 2', 2") by the acceleration mean maximum, thus obtaining an acceleration ratio;
- summing the acceleration ratio and the acceleration difference ratio, thus obtaining a sum value; and
- calculating a ratio between the sum value of the unit (2, 2', 2") and the maximum value of the sum value among the elementary units (2, 2', 2"), thus obtaining the score of the unit (2, 2', 2").

The scores obtained using the acceleration is used alone in the processing of determining the priority of inspection or, in examples not according to the invention, can be used in combination with the scores obtained by using the velocity.

In the first case, the processing of determining the priority of inspection of each unit (2, 2', 2") based on the score comprises ranking the scores of the units (2, 2', 2") and classifying the units (2, 2', 2"), said scores being calculated on the basis of the acceleration.

In the second case, which is not according to the invention, the processing of determining the priority of inspection comprises comparing, for each unit (2, 2', 2"), the score obtained by using the acceleration and the score calculated on the basis of the velocity.

For each unit (2, 2', 2"), a final score, is then selected as the score that is greater among the three calculated scores (acceleration, velocity) and the ranking is performed on the final score.

The arithmetic device can, therefore, execute the step of classifying by means of a neural network algorithm using simultaneously all the types of scores as inputs. Moreover, as previously mentioned, in examples not according to the invention all the proposed scores (based on velocity and acceleration) can be calculated for the displacement measurements derived from multi-temporal interferometry measurements of satellite SAR data acquired in both ascending and descending mode.

When only one score per unit (2, 2', 2") was calculated because only one quantity was used, said quantity being chosen among velocity and acceleration, the calculating the score can be replicated for ascending mode and descending mode data, so as to obtain for each unit (2, 2', 2"), a first score, resulting from SAR data acquired in ascending mode, and a second score, resulting from SAR data acquired in descending mode.

In this example not according to the invention, the calculating the score, therefore, will further comprise:

- comparing, for each unit (2, 2', 2"), the first score and the second score;
- calculating, for each unit (2, 2', 2"), a final score, the final score being equal to the first score, if the first score is higher than the second score, and to the second score, if the second score is higher than the first score.

When more than one score per unit (2, 2', 2") was calculated, because at least two quantities were used, said quantities being chosen among velocity and acceleration, the calculating the score can be replicated for ascending mode and descending mode data, so as to obtain for each unit (2, 2', 2") and for each quantity, a first score, resulting from SAR data acquired in ascending mode and being calculated on the basis of said quantity, said quantity being chosen among velocity and acceleration and a second score, resulting from SAR data acquired in descending mode and being calculated on the basis of said quantity. In this example not according to the invention, the calculating the score, therefore, will further comprise:

- comparing, for each unit (2, 2', 2"), the first score and the second score; and

- calculating, for each unit (2, 2', 2"), a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or on the risk classes of each unit (2, 2', 2"). The displaying information can comprise also the color mapping of the scores and/or of the risk classes of each unit (2, 2', 2") on satellite images of the polygonal infrastructure.

Referring to Figure 2, a second embodiment of the method of the present invention, is designed for determining the priority of inspection of the portions of a polygonal infrastructure (e.g. buildings, settling tanks of wastewater of a treatment plant, etc.) and comprises all the steps executed by the arithmetic device of the second embodiment of the system of the present invention.

Referring to Figure 3, a third embodiment of the system of the present invention is specifically designed for determining the priority of inspection of the portions of a point infrastructure (e.g. electrical towers, etc.).

The third embodiment of the system of the present invention comprising an arithmetic device that is configured to execute:

- processing of importing displacement measurement data derived from multi-temporal interferometry measurements of satellite SAR data over the point infrastructure to be monitored;
- processing of importing at least one information data record about the point infrastructure, said information data being selected from the group consisting of: location, geometry, material, size, age, topology, function, past failures, service levels, geology, geomorphology, digital elevation model, slope and aspect;
- processing of subdividing the point infrastructure into a plurality of elementary units (3, 3', 3"), each of said unit (3, 3', 3") comprising a plurality of persistent scatterers and/or distributed scatterers;
- calculating a coherence value for each of the persistent scatterers and/or distributed scatterers; and
- calculating a normalized coherence (NC) value for each of the persistent scatterers and/or distributed scatterers.

An elementary unit (3, 3', 3") is defined as circular area centred in a point of the infrastructure, the area having a radius of length comprised between 90 m or 110 m, or comprised between 10 m and 30 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where *Coh* is the coherence value of the scatterer and SC is the coherence threshold. If the coherence of that scatterer is lower than the coherence threshold (SC) and is different from the minimum coherence ($Coh_{min}$) of the scatterers inside the unit (3, 3', 3"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (3, 3', 3").

If the coherence value of that scatterer is zero, the normalized coherence (NC) is, then, given by the following equation:

$$NC = 0$$

Finally, if the coherence of that scatterer is equal to the coherence threshold (SC), the normalized coherence (NC) is, then, given by the following equation:

$$NC = 0.5$$

The coherence threshold (SC) is computed by the multi-temporal interferometry analysis as the value obtained with a Monte Carlo simulation.

The arithmetic device that is further configured to execute:

- processing of selecting the scatterers having a normalized coherence above a fixed threshold comprised between 0.4 and 0.6, thus obtaining a set of selected scatterers for each elementary unit (3, 3', 3");
- calculating at least a score for each elementary unit (3, 3', 3");
- determining the priority of inspection of each unit (3, 3', 3") by ranking the score of the units (3, 3', 3") and/or by classifying the units (3, 3', 3") based on the scores in risk classes; and
- processing of displaying information on the score of each unit (3, 3', 3") and/or a result of the determining of the priority of inspection on an output device.

The calculating at least a score for each elementary unit (3, 3', 3") comprises:

- calculating the velocity of each selected scatterer;
- calculating, for each unit (3, 3', 3"), a mean of the velocity selected scatterers inside the unit (3, 3', 3"), so as to obtain a velocity mean for each unit (3, 3', 3");
- calculating, for each unit (3, 3', 3") the absolute value of the difference between the velocity value of each selected scatterer inside the unit (3, 3', 3") and the velocity mean of each unit (3, 3', 3"), so as to obtain a velocity difference value for each selected scatterer;
- selecting the selected scatterers having the velocity difference value higher than a fixed threshold, thus obtaining a set of subselected scatterers for each elementary unit (3, 3", 3");
- calculating, for each unit (3, 3', 3"), a mean of the velocity difference values among the subselected scatterers inside the unit (3, 3', 3"), so as to obtain a velocity difference mean for each unit (3, 3', 3");
- calculating a maximum value of the velocity difference mean of the units (3, 3', 3"), thus obtaining a velocity difference mean maximum;
- dividing the velocity difference mean of each unit (3, 3', 3") by the velocity difference mean maximum, thus obtaining a velocity difference ratio;
- calculating a maximum value of the velocity means of the units (3, 3', 3"), thus obtaining a velocity mean maximum;
- dividing the velocity mean of each unit (3, 3', 3") by the velocity mean maximum, thus obtaining a velocity ratio;
- summing the velocity ratio and the velocity difference ratio, thus obtaining a sum value; and
- calculating a ratio between the sum value of the unit (3, 3', 3") and the maximum value of the sum value among the elementary units (3, 3', 3"), thus obtaining the score of the unit (3, 3', 3").

Alternatively to the velocity, other quantities can be used. For example, the acceleration of the scatterers can be used as quantity on which calculate the scores. In this case, the calculating at least a score for each elementary unit (3, 3', 3") comprises:

- calculating the acceleration of each selected scatterer;
- calculating, for each unit (3, 3', 3"), a mean of the acceleration selected scatterers inside the unit (3, 3', 3"), so as to obtain an acceleration mean for each unit (3, 3', 3");
- calculating, for each unit (3, 3', 3") the absolute value of the difference between the acceleration value of each selected scatterer inside the unit (3, 3', 3") and the acceleration mean of each unit (3, 3', 3"), so as to obtain an acceleration difference value for each selected scatterer;
- selecting the selected scatterers having the acceleration difference value higher than a fixed threshold, thus obtaining a set of subselected scatterers for each elementary unit (3, 3", 3");
- calculating, for each unit (3, 3', 3"), a mean of the acceleration difference values among the subselected scatterers inside the unit (3, 3’, 3"), so as to obtain a acceleration difference mean for each unit (3, 3’, 3");

- calculating a maximum value of the acceleration difference mean of the units (3, 3’, 3"), thus obtaining an acceleration difference mean maximum;
- dividing the acceleration difference mean of each unit (3, 3’, 3") by the acceleration difference mean maximum, thus obtaining an acceleration difference ratio;
- calculating a maximum value of the acceleration means of the units (3, 3’, 3"), thus obtaining an acceleration mean maximum;
- dividing the acceleration mean of each unit (3, 3’, 3") by the acceleration mean maximum, thus obtaining an acceleration ratio;
- summing the acceleration ratio and the acceleration difference ratio, thus obtaining a sum value; and
- calculating a ratio between the sum value of the unit (3, 3’, 3") and the maximum value of the sum value among the elementary units (3, 3’, 3"), thus obtaining the score of the unit (3, 3’, 3").

The scores obtained using the acceleration is used alone in the processing of determining the priority of inspection or, in examples not according to the invention, can be used in combination with the scores obtained by using the velocity.

In the first case, the processing of determining the priority of inspection of each unit (3, 3’, 3") based on the score comprises ranking the scores of the units (3, 3’, 3") and classifying the units (3, 3’, 3"), said scores being calculated on the basis of the acceleration.

In the second case, which is not according to the invention, the processing of determining the priority of inspection comprises comparing, for each unit (3, 3’, 3"), the score obtained by using the acceleration and the score calculated on the basis of the velocity.

For each unit (3, 3’, 3"), a final score, is then selected as the score that is greater among the two calculated scores (acceleration, velocity) and the ranking is performed on the final score.

The arithmetic device can, therefore, execute the step of classifying by means of a neural network algorithm using simultaneously all the types of scores as inputs.

Moreover, as previously mentioned, in examples not according to the invention all the proposed scores (based on velocity and acceleration) can be calculated for the displacement measurements derived from multi-temporal interferometry measurements of satellite SAR data acquired in both ascending and descending mode.

When only one score per unit (3, 3’, 3") was calculated because only one quantity was used, said quantity being chosen among velocity and acceleration, the calculating the score can be replicated for ascending mode and descending mode data, so as to obtain for each unit (3, 3’, 3"), a first score, resulting from SAR data acquired in ascending mode, and a second score, resulting from SAR data acquired in descending mode.

In this example not according to the invention, the calculating the score, therefore, will further comprise:

- comparing, for each unit (3, 3’, 3"), the first score and the second score;
- calculating, for each unit (3, 3’, 3"), a final score, the final score being equal to the first score, if the first score is higher than the second score, and to the second score, if the second score is higher than the first score.

When more than one score per unit (3, 3’, 3") was calculated, because at least two quantities were used, said quantities being chosen among velocity and acceleration, the calculating the score can be replicated for ascending mode and descending mode data, so as to obtain for each unit (3, 3’, 3") and for each quantity, a first score, resulting from SAR data acquired in ascending mode and being calculated on the basis of said quantity, said quantity being chosen among velocity and acceleration and a second score, resulting from SAR data acquired in descending mode and being calculated on the basis of said quantity. In this example not according to the invention, the calculating the score, therefore, will further comprise:

- comparing, for each unit (3, 3’, 3"), the first score and the second score; and

- calculating, for each unit (3, 3’, 3"), a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or the risk classes of each unit (3, 3’, 3"). The displaying information can comprise also the color mapping of the scores and/or of the risk classes of each unit (3, 3’, 3") on satellite images of the point infrastructure.

Referring to Figure 3, a third embodiment of the method of the present invention, is designed for determining the priority of inspection of the portions of a point infrastructure (e.g. electrical towers, etc.) and comprises all the steps executed by the arithmetic device of the third embodiment of the system of the present invention. Referring to Figure 4, a fourth embodiment of the method of the present invention is specifically designed for determining the priority of inspection of the portions of a territory.

The fourth embodiment of the system of the present invention comprising an arithmetic device that is configured to execute:

- processing of importing displacement measurement data derived from multi-temporal interferometry measurements of satellite SAR data over the territory to be monitored;
- processing of importing at least one information data record about the territory, said information data being selected from the group consisting of: location, geometry, geology, geomorphology, digital elevation model, slope and aspect;
- processing of subdividing the territory into a plurality of elementary units (4, 4', 4"), each of said unit (4, 4', 4") comprising a plurality of persistent scatterers and/or distributed scatterers;
- calculating a coherence value for each of the persistent scatterers and/or distributed scatterers; and
- calculating a normalized coherence (NC) value for each of the persistent scatterers and/or distributed scatterers.

An elementary unit (4, 4', 4") is defined as a circular shaped or polygonal shaped (e.g. square-shaped or hexagon-shaped) area, the plurality of the elementary units (4, 4', 4") forming a grid covering the territory. The size and placement of each area are defined using horizontal and vertical spacing, both ranging between 30 and 300 m.

If the coherence of that scatterer is higher than a coherence threshold (SC), the normalized coherence (NC) of a scatterer is given by the following equation:

$$NC = 0.5 + 0.5 * \frac{Coh - SC}{1 - SC}$$

where *Coh* is the coherence value of the scatterer and SC is the coherence threshold. If the coherence of that scatterer is lower than the coherence threshold (SC) and is different from the minimum coherence ($Coh_{min}$) of the scatterers inside the unit (4, 4', 4"), the normalized coherence (NC) is given, instead, by the following equation:

$$NC = 0.5 + 0.5 * \frac{SC - Coh}{SC - Coh_{min}}$$

where $Coh_{min}$ is the minimum coherence of the scatterers inside the unit (4, 4', 4").

If the coherence value of that scatterer is zero, the normalized coherence (NC) is, then, given by the following equation:

$$NC = 0$$

Finally, if the coherence of that scatterer is equal to the coherence threshold *(SC),* the normalized coherence (NC) is, then, given by the following equation:

$$NC = 0.5$$

The coherence threshold (SC) is computed by the multi-temporal interferometry analysis as the value obtained with a Monte Carlo simulation.

The arithmetic device that is further configured to execute:

- processing of selecting the scatterers having a normalized coherence above a fixed threshold comprised between 0.4 and 0.6, thus obtaining a set of selected scatterers for each elementary unit (4, 4', 4");
- calculating at least a score for each elementary unit (4, 4', 4");
- determining the priority of inspection of each unit (4, 4', 4") by ranking the score of the units (4, 4', 4") and/or by classifying the units (4, 4', 4") based on the scores in risk classes; and
- processing of displaying information on the score of each unit (4, 4', 4") and/or a result of the determining of the priority of inspection on an output device.

The calculating at least a score for each elementary unit (4, 4', 4") comprises:

- calculating the velocity of each selected scatterer;
- calculating, for each unit (4, 4', 4"), a mean of the velocity selected scatterers inside the unit (4, 4', 4"), so as to obtain a velocity mean for each unit (4, 4', 4");
- calculating, for each unit (4, 4', 4") the absolute value of the difference between the velocity value of each selected scatterer inside the unit (4, 4', 4") and the velocity mean of each unit (4, 4', 4"), so as to obtain a velocity difference value for each selected scatterer;
- selecting the selected scatterers having the velocity difference value higher than a fixed threshold, thus obtaining a set of subselected scatterers for each elementary unit (4, 4', 4");
- calculating, for each unit (4, 4', 4"), a mean of the velocity difference values among the subselected scatterers inside the unit (4, 4', 4"), so as to obtain a velocity difference mean for each unit (4, 4', 4");
- calculating a maximum value of the velocity difference mean of the units (4, 4', 4"), thus obtaining a velocity difference mean maximum;
- dividing the velocity difference mean of each unit (4, 4', 4") by the velocity difference mean maximum, thus obtaining a velocity difference ratio;
- calculating a maximum value of the velocity means of the units (4, 4', 4"), thus obtaining a velocity mean maximum;
- dividing the velocity mean of each unit (4, 4', 4") by the velocity mean maximum, thus obtaining a velocity ratio;

- summing the velocity ratio and the velocity difference ratio, thus obtaining a sum value; and
- calculating a ratio between the sum value of the unit (4, 4', 4") and the maximum value of the sum value among the elementary units (4, 4', 4"), thus obtaining the score of the unit (4, 4', 4").

Alternatively to the velocity, other quantities can be used such as the product of the velocity of a given scatterer and the density of the selected scatterers of the elementary unit (4, 4', 4") containing that scatterer.

The scores obtained using the product of the density per the velocity is used alone in the processing of determining the priority of inspection or, in examples not according to the invention, can be used in combination with the scores obtained by using the velocity.

In the first case, the processing of determining the priority of inspection of each unit (4, 4', 4") based on the score comprises ranking the scores of the units (4, 4', 4") and classifying the units (4, 4', 4"), said scores being calculated on the basis of the density per velocity.

In the second case, which is not according to the invention, the processing of determining the priority of inspection comprises comparing, for each unit (4, 4', 4"), the score obtained by using the density per velocity and the score calculated on the basis of the velocity.

For each unit (4, 4', 4"), a final score, is then selected as the score that is greater among the two calculated scores (velocity, density per velocity) and the ranking is performed on the final score.

The arithmetic device can, therefore, execute the step of classifying by means of a neural network algorithm using simultaneously all the types of scores as inputs.

Moreover, as previously mentioned, in examples not according to the invention all the proposed scores (based on velocity and density per velocity) can be calculated for the displacement measurements derived from multi-temporal interferometry measurements of satellite SAR data acquired in both ascending and descending mode.

When only one score per unit (4, 4', 4") was calculated because only one quantity was used, said quantity being chosen among velocity and density per velocity, the calculating the score can be replicated for ascending mode and descending mode data, so as to obtain for each unit (4, 4', 4"), a first score, resulting from SAR data acquired in ascending mode, and a second score, resulting from SAR data acquired in descending mode. In this example not according to the invention, the calculating the score, therefore, will further comprise:

- comparing, for each unit (4, 4', 4"), the first score and the second score;
- calculating, for each unit (4, 4', 4"), a final score, the final score being equal to the first score, if the first score is higher than the second score, and to the second score, if the second score is higher than the first score.

When more than one score per unit (4, 4', 4") was calculated, because at least two quantities were used, said quantities being chosen among velocity and density per velocity, the calculating the score can be replicated for ascending mode and descending mode data, so as to obtain for each unit (4, 4', 4") and for each quantity, a first score, resulting from SAR data acquired in ascending mode and being calculated on the basis of said quantity, said quantity being chosen among velocity and density per velocity and a second score, resulting from SAR data acquired in descending mode and being calculated on the basis of said quantity. In this example not according to the invention, the calculating the score, therefore, will further comprise:

- comparing, for each unit (4, 4', 4"), the first score and the second score; and
- calculating, for each unit (4, 4', 4"), a partial final score relative to said quantity, the partial final score being equal to the first score, if the first score is higher than the second score, and to the second score, if the second score is higher than the first score.

The partial final scores calculated for all the used quantities have, then, to be compared so as obtaining a total final score. To this aim, the latter is calculated as the higher partial final scores.

Finally, in all the situations described above, the arithmetic device is further configured to execute processing of displaying information on the score and/or the risk classes of each unit (4, 4', 4"). The displaying information can comprise also the color mapping of the scores and/or of the risk classes of each unit (4, 4', 4") on satellite images of the territory.

Referring to Figure 4, a fourth embodiment of the method of the present invention, is designed for determining the priority of inspection of the portions of a territory and comprises all the steps executed by the arithmetic device of the fourth embodiment of the system of the present invention.

## Claims

**1.** A system for determining the priority of inspection of environmental and man-made objects of the earth's surface comprising an arithmetic device that is configured to execute:

- processing of importing displacement measurement data derived from multi-temporal interferometry measurements of satellite SAR data over the objects to be monitored;
- processing of importing at least one information data record about the objects, said information data being selected from the group consisting of: location, geometry, material, size, age, topology, function, past failures, service levels, traffic data, geology, geomorphology, digital elevation model, slope and aspect;
- processing of subdividing the objects into a plurality of elementary units (1, 1', 1", 2, 2', 2", 3, 3', 3", 4, 4', 4"), each of said unit (1, 1', 1", 2, 2', 2", 3, 3', 3", 4, 4', 4") comprising a plurality of persistent scatterers and/or distributed scatterers;
- calculating a coherence value for each of the persistent scatterers and/or distributed scatterers;
- calculating a first quantity value for each of the persistent scatterers and/or distributed scatterers, said first quantity being dependent on the coherence value;
- processing of selecting the scatterers having a first quantity value above a fixed threshold, thus obtaining a set of selected scatterers for each elementary unit (1, 1', 1", 2, 2', 2", 3, 3', 3", 4, 4', 4");
- calculating at least a score for each elementary unit (1, 1', 1", 2, 2', 2", 3, 3', 3", 4, 4', 4");
- determining the priority of inspection of each unit (1, 1', 1", 2, 2', 2", 3, 3', 3", 4, 4', 4") by ranking the score of the units (1, 1', 1", 2, 2', 2", 3, 3', 3", 4, 4', 4") and/or by classifying the units (1, 1', 1", 2, 2', 2", 3, 3', 3", 4, 4', 4") based on the scores in risk classes; and
- processing of displaying information on the score of each unit (1, 1', 1", 2, 2, 2", 3, 3', 3", 4, 4', 4") and/or a result of the determining of the priority of inspection on an output device;

**characterized in that** the calculating the score comprises:

- calculating at least a second quantity dependent on the displacement for each selected scatterer so as to obtain a second quantity value for each selected scatterer;
- calculating, for each unit (1, 1', 1", 2, 2', 2", 3, 3', 3", 4, 4', 4"), a mean of the second quantity value of the selected scatterers inside the unit (1, 1', 1", 2, 2', 2", 3, 3', 3",4,4',4"), so as to obtain a second quantity mean for each unit (1, 1', 1", 2, 2', 2", 3, 3', 3", 4, 4', 4"); and
- performing the following steps:

  • calculating a maximum value of the second quantity means of the units (1, 1', 1", 2, 2', 2", 3, 3', 3",4,4',4"), thus obtaining a second quantity mean maximum; and
  • dividing the second quantity mean of each unit (1, 1', 1", 2, 2', 2", 3, 3', 3", 4, 4', 4") by the second quantity mean maximum, thus obtaining the score;

  or

  • calculating, for each unit (1, 1', 1", 2, 2', 2", 3, 3', 3", 4, 4', 4") the absolute value of the difference between the second quantity value of each selected scatterer inside the unit (1, 1', 1", 2, 2', 2", 3, 3', 3", 4, 4', 4") and the second quantity mean of each unit (1, 1', 1", 2, 2', 2", 3, 3', 3", 4, 4', 4"), so as to obtain a second quantity difference value for each selected scatterer;
  • selecting the selected scatterers having the second quantity difference value higher than a fixed threshold, thus obtaining a set of subselected scatterers for each elementary unit (1, 1', 1", 2, 2', 2", 3, 3', 3", 4', 4', 4");
  • calculating, for each unit (1, 1', 1", 2, 2', 2", 3, 3', 3", 4, 4', 4"), a mean of the second quantity difference values among the subselected scatterers inside the unit (1, 1', 1", 2, 2', 2", 3, 3', 3", 4, 4', 4"), so as to obtain a second quantity difference mean for each unit (1, 1', 1", 2, 2', 2", 3, 3', 3", 4, 4', 4");
  • calculating a maximum value of the second quantity difference mean of the units (1, 1', 1", 2, 2', 2", 3, 3', 3", 4, 4', 4"), thus obtaining a second quantity difference mean maximum;
  • dividing the second quantity difference mean of each unit (1, 1', 1", 2, 2', 2", 3, 3', 3", 4, 4', 4") by the second quantity difference mean maximum, thus obtaining a second quantity difference ratio;
  • calculating a maximum value of the second quantity means of the units (1, 1', 1", 2, 2', 2", 3, 3', 3", 4, 4', 4"), thus obtaining a second quantity mean maximum;
  • dividing the second quantity mean of each unit (1, 1', 1", 2, 2', 2", 3, 3', 3", 4, 4', 4") by the second quantity mean maximum, thus obtaining a second quantity ratio;
  • summing the second quantity ratio and the second quantity difference ratio, thus obtaining a sum value; and
  • calculating a ratio between the sum value of the unit (1, 1', 1", 2, 2', 2", 3, 3', 3", 4, 4', 4") and the maximum value of the sum value among the elementary units (1, 1', 1", 2, 2', 2", 3, 3', 3", 4, 4', 4"), thus obtaining the score of the unit (1, 1', 1", 2, 2', 2", 3, 3', 3", 4', 4', 4").

**2.** The system according to claim 1 wherein the first quantity (NC) value of a scatterer is given by the following equation, if the coherence value of that scatterer is higher than a coherence threshold (SC):

$$NC = 0.5 + 0.5 * \frac{Coh - SC}{1 - SC}$$

where *Coh* is the coherence value of the scatterer and SC is the coherence threshold; or by the following equation, if the coherence value of that scatterer is lower than the coherence threshold (SC) and is different from the minimum coherence value ($Coh_{min}$) of the scatterers inside the unit (1, 1', 1", 2, 2', 2", 3, 3', 3", 4, 4, 4"):

$$NC = 0.5 + 0.5 * \frac{SC - Coh}{SC - Coh_{min}}$$

where *Coh* is the coherence value of the scatterer, SC is the threshold and $Coh_{min}$ is the minimum coherence value of the scatterers inside the unit (1, 1', 1", 2, 2', 2", 3, 3', 3", 4, 4', 4"); or by the following equation if the coherence value of that scatterer is zero:

$$NC = 0$$

or by the following equation, if the coherence value of that scatterer is equal to the coherence threshold:

$$NC = 0.5$$

**3.** The system according to claim 1 or 2 wherein said fixed threshold is comprised between 0.4 and 0.6.

**4.** The system according to any of the claims from 1 to 3 wherein the second quantity for each selected scatterer is the velocity of that scatterer.

**5.** The system according to any of the claims from 1 to 3 wherein the second quantity for each selected scatterer is a product of the velocity of that scatterer and the density of the selected scatterers of the elementary unit (1, 1', 1", 4, 4', 4") containing that scatterer.

**6.** The system according to any of the claims from 1 to 3 wherein the second quantity is a product of the velocity of that scatterer and the density of those scatterers that belong to a subset of the selected scatterers in the elementary unit (1, 1', 1", 4, 4', 4") containing that scatterer.

**7.** The system according to claim 6 wherein the subset comprises only those selected scatterers having a velocity exceeding the velocity mean in that unit (1, 1', 1", 4, 4', 4") of a given velocity threshold.

**8.** The system according to any of the claims from 1 to 3 wherein the second quantity for each selected scatterer is the acceleration of that scatterer.

**9.** The system according to claim 6 wherein the object is a linear infrastructure and the elementary unit (1, 1', 1") is an area surrounding a segment of the infrastructure.

**10.** The system according to any of the claims from 1 to 8 wherein the object is a point infrastructure and the elementary unit (3, 3', 3") is a circular area centred in a point of the infrastructure.

**11.** The system according to any of the claims from 1 to 6 wherein the object is a polygonal infrastructure and the elementary unit (2, 2', 2") is an area surrounding a polygon of the infrastructure.

**12.** The system according to any of the claims from 1 to 6 wherein the object is a territory and the elementary unit (4, 4', 4") is a circular shaped or polygonal shaped area, the plurality of the elementary units (4, 4', 4") forming a grid covering the territory.

**13.** The system according to any of the preceding claims wherein the risk classes are:

- high risk, if the score is higher than a upper score threshold;
- intermediate risk, if the score is comprised between a lower score threshold and the upper score threshold; and
- low risk, if the score is lower than the lower score threshold.

**14.** The system according to the any of the previous claims wherein the arithmetic device is configured to execute determining the priority of inspection of each unit (1, 1', 1", 2, 2', 2", 3, 3', 3", 4, 4', 4") by classifying the units (1, 1', 1", 2, 2', 2", 3, 3', 3", 4, 4', 4") based on the scores, by means of a neural network algorithm using the scores of the units (1, 1', 1", 2, 2', 2", 3, 3', 3", 4, 4', 4") as input.

**15.** The system according to claim 13 or 14 wherein the displaying information comprise displaying the scores and/or risk classes of each unit (1, 1', 1", 2, 2', 2", 3, 3', 3", 4, 4', 4").

**16.** The system according to the preceding claim wherein the processing of displaying information comprises color mapping the scores and/or risk classes of each unit (1, 1', 1", 2, 2', 2", 3, 3', 3", 4, 4', 4") on satellite images of the object.

**17.** A method for determining the priority of inspection of environmental and man-made objects of the earth's surface comprising:

- executing, by means of an arithmetic device, the following steps:

  • importing displacement measurement data derived from multi-temporal interferometry measurements of satellite SAR data over the objects to be monitored;
  • importing at least one information data record about the objects, said information data being selected from the group consisting of: location, geometry, material, size, age, topology, function, past failures, service levels, traffic data, geology, geomorphology, digital elevation model, slope and aspect;
  • subdividing the objects into a plurality of elementary units (1, 1', 1", 2, 2', 2", 3, 3', 3", 4, 4', 4"), each of said unit (1, 1', 1", 2, 2', 2", 3, 3', 3", 4, 4', 4") comprising a plurality of persistent scatterers and/or distributed scatterers;
  • calculating a coherence value for each of the persistent scatterers and/or distributed scatterers;
  • calculating a first quantity value for each of the persistent scatterers and/or distributed scatterers, said first quantity being dependent on the coherence value;
  • selecting the scatterers having a first quantity value above a fixed threshold, thus obtaining a set of selected scatterers for each elementary unit (1, 1', 1", 2, 2', 2", 3, 3', 3", 4, 4', 4" );
  • calculating at least a score for each elementary unit (1, 1', 1", 2, 2', 2", 3, 3', 3", 4, 4', 4");
  • determining the priority of inspection of each unit (1, 1', 1", 2, 2', 2'', 3, 3', 3", 4, 4', 4") by ranking the score of the units (1, 1', 1", 2, 2', 2", 3, 3', 3", 4, 4', 4") and/or by classifying the units (1, 1', 1", 2, 2', 2", 3, 3', 3", 4, 4', 4") based on the scores in risk classes; and
  • displaying information on the score of each unit (1, 1', 1", 2, 2', 2", 3, 3', 3", 4, 4', 4") and/or a result of the determining of the priority of inspection on an output device;

**characterized in that** the calculating the score comprises:

- calculating at least a second quantity dependent on the displacement for each selected scatterer so as to obtain a second quantity value for each selected scatterer;
- calculating, for each unit (1, 1', 1", 2, 2', 2", 3, 3', 3", 4, 4', 4"), a mean of the second quantity value of the selected scatterers inside the unit (1, 1', 1", 2, 2', 2", 3, 3', 3",4,4',4"), so as to obtain a second quantity mean for each unit (1, 1', 1", 2, 2', 2", 3, 3', 3", 4, 4', 4"); and
- performing the following steps:

  • calculating a maximum value of the second quantity means of the units, thus obtaining a second quantity mean maximum; and
  • dividing the second quantity mean of each unit (1, 1', 1", 2, 2', 2", 3, 3', 3", 4, 4', 4") by the second quantity mean maximum, thus obtaining the score;
  or
  • calculating, for each unit (1, 1', 1", 2, 2', 2", 3, 3', 3", 4, 4', 4") the absolute value of the difference between the second quantity value of each selected scatterer inside the unit (1, 1', 1", 2, 2', 2", 3, 3', 3", 4, 4', 4") and the second quantity mean of each unit (1, 1', 1", 2, 2', 2", 3, 3', 3", 4, 4', 4"), so as to obtain a second quantity difference value for each selected scatterer;
  • selecting the selected scatterers having the second quantity difference value higher than a fixed threshold, thus obtaining a set of subselected scatterers for each elementary unit (1, 1', 1", 2, 2', 2", 3, 3', 3", 4, 4, 4");
  • calculating, for each unit (1, 1', 1", 2, 2', 2", 3, 3', 3", 4, 4', 4"), a mean of the second quantity difference values among the subselected scatterers inside the unit (1, 1', 1", 2, 2', 2", 3, 3', 3", 4, 4', 4"), so as to obtain a second quantity difference mean for each unit (1, 1', 1", 2, 2', 2", 3, 3', 3", 4, 4', 4");
  • calculating a maximum value of the second quantity difference mean of the units (1, 1', 1", 2, 2', 2", 3, 3', 3", 4, 4', 4"), thus obtaining a second quantity difference mean maximum;
  • dividing the second quantity difference mean of each unit (1, 1', 1", 2, 2', 2", 3, 3', 3", 4, 4', 4") by the second quantity difference mean maximum, thus obtaining a second quantity difference ratio;
  • calculating a maximum value of the second quantity means of the units (1, 1', 1", 2, 2', 2", 3, 3', 3", 4, 4', 4"), thus obtaining a second quantity mean maximum;
  • dividing the second quantity mean of each unit (1, 1', 1", 2, 2', 2", 3, 3', 3", 4, 4', 4") by the second quantity mean maximum, thus obtaining a second quantity ratio;
  • summing the second quantity ratio and the second quantity difference ratio, thus obtaining a sum value; and
  • calculating a ratio between the sum value of the unit (1, 1', 1", 2, 2', 2", 3, 3', 3", 4, 4', 4") and the maximum value of the sum value among the elementary units, thus obtaining the score of the unit (1, 1', 1", 2, 2', 2", 3, 3', 3", 4, 4', 4").

## Patentansprüche

1. Ein System zur Bestimmung der Priorität der Überprüfung von natürlichen und künstlichen Objekten auf der Erdoberfläche, das eine Rechenvorrichtung umfasst, die so konfiguriert ist, dass sie Folgendes ausführt:

   - Verarbeitung des Imports von Verschiebungsmessdaten, die aus multitemporalen Interferometrie-Messungen von Satelliten-SAR-Daten über den zu überwachenden Objekten abgeleitet wurden;
   - Verarbeitung des Imports mindestens eines Informationsdatensatzes über die Objekte, wobei die besagten Informationsdaten aus der Gruppe ausgewählt werden, die aus folgenden Elementen besteht: Standort, Geometrie, Material, Größe, Alter, Topologie, Funktion, frühere Ausfälle, Servicelevels, Verkehrsdaten, Geologie, Geomorphologie, digitales Höhenmodell, Neigung und Aspekt;
   - Verarbeitung der Unterteilung der Objekte in eine Vielzahl von Elementareinheiten (1, 1', 1", 2, 2', 2", 3, 3', 3", 4, 4', 4"), wobei jede der besagten Einheiten (1, 1', 1", 2, 2', 2", 3, 3', 3", 4, 4', 4") eine Vielzahl von persistenten Streuern und/oder verteilten Streuern umfasst;
   - Berechnung eines Kohärenzwerts für jeden der persistenten Streuer und/oder verteilten Streuer;
   - Berechnung eines ersten Mengenwerts für jeden der persistenten Streuer und/oder verteilten Streuer, wobei die besagte erste Menge vom Kohärenzwert abhängt;
   - Verarbeitung der Auswahl der Streuer mit einem ersten Mengenwert oberhalb eines festgelegten Schwellenwerts, wodurch für jede Elementareinheit (1, 1', 1", 2, 2', 2", 3, 3', 3", 4, 4', 4") ein Satz ausgewählter Streuer erhalten wird;
   - Berechnung mindestens einer Punktzahl für jede Elementareinheit (1, 1', 1", 2, 2', 2", 3, 3', 3" 4, 4', 4");
   - Bestimmung der Priorität der Überprüfung jeder Einheit (1, 1', 1", 2, 2', 2", 3, 3', 3", 4, 4', 4") durch Einstufen der Punktzahl der Einheiten (1, 1', 1", 2, 2', 2", 3, 3',3", 4, 4', 4") und/oder durch Klassifizierung der Einheiten (1, 1', 1", 2, 2', 2", 3, 3', 4, 4', 4") auf der Grundlage der Punktzahlen in Risikoklassen; und
   - Verarbeitung der Anzeige von Informationen über die Punktzahl jeder Einheit (1, 1', 1", 2, 2', 2", 3, 3', 3", 4, 4', 4") und/oder eines Ergebnisses der Bestimmung der Priorität der Überprüfung auf einer Ausgabevorrichtung;

   **dadurch gekennzeichnet, dass** die Berechnung der Punktzahl Folgendes umfasst:

   - Berechnung mindestens einer zweiten Menge in Abhängigkeit von der Verschiebung für jeden ausgewählten Streuer, um einen zweiten Mengenwert für jeden ausgewählten Streuer zu erhalten;
   - Berechnung für jede Einheit (1, 1', 1", 2, 2', 2", 3, 3', 3", 4, 4', 4") eines Mittelwerts des zweiten Mengenwerts der ausgewählten Streuer innerhalb der Einheit (1, 1', 1", 2, 2', 2", 3, 3', 3", 4, 4', 4"), um einen zweiten Mengenmittelwert für jede Einheit (1, 1', 1", 2, 2', 2", 3, 3', 3", 4, 4', 4") zu erhalten; und
   - Durchführung der folgenden Schritte:

     • Berechnung eines Maximalwerts des zweiten Mengenmittelwerts der Einheiten (1, 1', 1", 2, 2', 2", 3, 3', 3", 4, 4', 4"), wodurch ein zweiter Mengenmittelwert-Maximalwert erhalten wird; und
     • Teilung des zweiten Mengenmittelwerts jeder Einheit (1, 1', 1", 2, 2', 2", 3, 3', 3", 4, 4', 4") durch den zweiten Mengenmittelwert-Maximalwert, wodurch die Punktzahl erhalten wird;
     oder
     • Berechnung für jede Einheit (1, 1', 1", 2, 2', 2", 3, 3', 3", 4, 4', 4") des absoluten Werts der Differenz zwischen dem zweiten Mengenwert jedes ausgewählten Streuers innerhalb der Einheit (1, 1', 1", 2, 2', 2", 3, 3', 3", 4, 4', 4") und dem zweiten Mengenmittelwert jeder Einheit (1, 1', 1", 2, 2', 2", 3, 3', 3", 4, 4', 4"), um einen zweiten Mengendifferenzwert für jeden ausgewählten Streuer zu erhalten;
     • Auswählen der ausgewählten Streuer mit dem zweiten Mengendifferenzwert, der höher als ein fester Schwellenwert ist, wodurch ein Satz von unterausgewählten Streuern für jede Elementareinheit (1, 1', 1", 2, 2', 2", 3, 3', 3", 4, 4', 4") erhalten wird;
     • Berechnung für jede Einheit (1, 1', 1", 2, 2', 2", 3, 3', 3", 4, 4', 4") eines Mittelwerts der zweiten Mengendifferenzwerte unter den unterausgewählten Streuern innerhalb der Einheit (1, 1', 1", 2, 2', 2", 3, 3', 3", 4, 4', 4"), um einen zweiten Mengendifferenzmittelwert für jede Einheit (1, 1', 1, 2, 2', 2", 3, 3', 3", 4, 4', 4") zu erhalten;
     • Berechnung eines Maximalwerts des zweiten Mengendifferenzmittelwerts der Einheiten (1, 1', 1", 2, 2', 2", 3, 3', 3", 4, 4', 4"), wodurch ein zweiter Mengendifferenzmittelwert-Maximalwert erhalten wird;
• Teilung des zweiten Mengendifferenzmittelwerts jeder Einheit (1, 1', 1", 2, 2', 2", 3, 3', 3", 4, 4', 4") durch den zweiten Mengendifferenzmittelwert-Maximalwert, wodurch ein zweites Mengendifferenzverhältnis erhalten wird;
• Berechnung eines Maximalwerts der zweiten Mengenmittelwerte der Einheiten (1, 1', 1", 2, 2', 2", 3, 3', 3", 4, 4', 4"), wodurch ein zweiter Mengenmittelwert-Maximalwert erhalten wird;
• Teilung des zweiten Mengenmittelwerts jeder Einheit (1, 1', 1, 2, 2', 2", 3, 3', 3", 4, 4', 4") durch den zweiten Mengenmittelwert-Maximalwert, wodurch ein zweites Mengenverhältnis erhalten wird;
• Summierung des zweiten Mengenverhältnisses und des zweiten Mengendifferenzverhältnisses, wodurch ein Summenwert erhalten wird; und
• Berechnung eines Verhältnisses zwischen dem Summenwert der Einheit (1, 1', 1", 2, 2', 2", 3, 3', 3", 4, 4', 4") und dem Maximalwert des Summenwerts unter den Elementareinheiten (1, 1', 1", 2, 2', 2", 3, 3', 3", 4, 4', 4"), wodurch die Punktzahl der Einheit (1, 1', 1", 2, 2', 2", 3, 3', 3", 4, 4', 4") erhalten wird.

**2.** Das System gemäß Anspruch 1, wobei der erste Mengenwert (NC) eines Streuers durch die folgende Gleichung gegeben ist, wenn der Kohärenzwert dieses Streuers höher als ein Kohärenzschwellenwert (SC) ist:

$$NC = 0.5 + 0.5 * \frac{Coh - SC}{1 - SC}$$

wobei Coh der Kohärenzwert des Streuers und SC der Kohärenzschwellenwert ist; oder durch die folgende Gleichung, wenn der Kohärenzwert dieses Streuers niedriger als der Kohärenzschwellenwert (SC) ist und sich vom minimalen Kohärenzwert (ohmin) der Streuer innerhalb der Einheit (1, 1', 1", 2, 2', 2", 3, 3', 3", 4, 4', 4") unterscheidet:

$$NC = 0.5 + 0.5 * \frac{SC - Coh}{SC - Coh_{min}}$$

wobei Coh der Kohärenzwert des Streuers ist, SC der Schwellenwert und $Coh_{min}$ der minimale Kohärenzwert der Streuer innerhalb der Einheit (1, 1', 1", 2, 2', 2", 3, 3', 3", 4, 4', 4"); oder durch die folgende Gleichung, wenn der Kohärenzwert dieses Streuers Null ist:

$$NC = 0$$

oder durch die folgende Gleichung, wenn der Kohärenzwert dieses Streuers gleich dem Kohärenzschwellenwert ist:

$$NC = 0.5$$

**3.** Das System gemäß Anspruch 1 oder 2, wobei der besagte festgestellte Schwellenwert zwischen 0,4 und 0,6 liegt.

**4.** Das System gemäß einem jeden der Ansprüche von 1 bis 3, wobei die zweite Menge für jeden ausgewählten Streuer die Geschwindigkeit dieses Streuers ist.

**5.** Das System gemäß einem jeden der Ansprüche von 1 bis 3, wobei die zweite Menge für jeden ausgewählten Streuer ein Produkt aus der Geschwindigkeit dieses Streuers und der Dichte der ausgewählten Streuer der Elementareinheit (1, 1', 1", 4, 4', 4") ist, die diesen Streuer enthält.

**6.** Das System gemäß einem jeden der Ansprüche von 1 bis 3, wobei die zweite Menge ein Produkt aus der Geschwindigkeit dieses Streuers und der Dichte jener Streuer ist, die zu einer Untermenge der ausgewählten Streuer in der Elementareinheit (1, 1', 1", 4, 4', 4") gehören, die diesen Streuer enthält.

**7.** Das System gemäß Anspruch 6, wobei die Untermenge nur diejenigen ausgewählten Streuer umfasst, deren Geschwindigkeit den Geschwindigkeitsmittelwert in dieser Einheit (1, 1', 1", 4, 4', 4") eines gegebenen Geschwindigkeitsschwellenwerts überschreitet.

**8.** Das System gemäß einem jeden der Ansprüche von 1 bis 3, wobei die zweite Menge für jeden ausgewählten Streuer die Beschleunigung dieses Streuers ist.

**9.** Das System gemäß Anspruch 6, wobei das Objekt eine lineare Infrastruktur ist und die Elementareinheit (1, 1', 1") ein Bereich ist, der ein Segment der Infrastruktur umgibt.

**10.** Das System gemäß einem jeden der Ansprüche von 1 bis 8, wobei das Objekt eine Punktinfrastruktur ist und die Elementareinheit (3, 3', 3") ein kreisförmiger Bereich ist, der in einem Punkt der Infrastruktur zentriert ist.

**11.** Das System gemäß einem jeden der Ansprüche von 1 bis 6, wobei das Objekt eine polygonale Infrastruktur ist und die Elementareinheit (2, 2', 2") ein Bereich ist, der ein Polygon der Infrastruktur umgibt.

**12.** Das System gemäß einem jeden der Ansprüche von 1 bis 6, wobei das Objekt ein Gebiet ist und die Elementareinheit (4, 4', 4") ein kreisförmiger oder polygonalförmiger Bereich ist, wobei die Vielzahl der Elementareinheiten (4, 4', 4") ein Gitter bildet, das das Gebiet abdeckt.

**13.** Das System gemäß einem jeden der vorhergehenden Ansprüche, wobei die Risikoklassen Folgendes sind:

- hohes Risiko, wenn die Punktzahl über einem oberen Schwellenwert liegt;
- mittleres Risiko, wenn die Punktzahl zwischen einem unteren Schwellenwert und dem oberen Schwellenwert liegt; und
- geringes Risiko, wenn die Punktzahl unter dem unteren Schwellenwert liegt.

**14.** Das System gemäß einem jeden der vorhergehenden Ansprüche, wobei die Rechenvorrichtung so konfiguriert ist, dass sie die Bestimmung der Priorität der Überprüfung jeder Einheit (1, 1', 1", 2, 2', 2", 3, 3', 3", 4, 4', 4") durch Klassifizierung der Einheiten (1, 1', 1", 2, 2', 2", 3, 3', 3", 4, 4', 4") auf der Grundlage der Punktzahlen durchführt, und zwar mittels eines neuronalen Netzwerkalgorithmus, der die Punktzahlen der Einheiten (1, 1', 1", 2, 2', 2", 3, 3', 3", 4, 4', 4") als Eingabe verwendet.

**15.** Das System gemäß Anspruch 13 oder 14, wobei die Anzeigeinformationen die Anzeige der Punktzahlen und/oder Risikoklassen jeder Einheit (1, 1', 1", 2, 2', 2", 3, 3', 3", 4, 4', 4") umfassen.

**16.** Das System gemäß dem vorhergehenden Anspruch, wobei die Verarbeitung der Anzeigeinformationen die Farbabbildung der Punktzahlen und/oder Risikoklassen jeder Einheit (1, 1', 1", 2, 2',2", 3, 3', 3", 4, 4', 4") auf Satellitenbildern des Objekts umfasst.

**17.** Ein Verfahren zur Bestimmung der Priorität der Überprüfung von natürlichen und künstlichen Objekten auf der Erdoberfläche, umfassend:

- Ausführung mittels einer Rechenvorrichtung der folgenden Schritte:

  • Importieren von Verschiebungsmessdaten, die aus multitemporalen Interferometrie-Messungen von Satelliten-SAR-Daten über den zu überwachenden Objekten abgeleitet wurden;
  • Importieren mindestens eines Informationsdatensatzes über die Objekte, wobei die besagten Informationsdaten aus der Gruppe ausgewählt werden, die aus Folgendem besteht: Standort, Geometrie, Material, Größe, Alter, Topologie, Funktion, frühere Ausfälle, Servicelevel, Verkehrsdaten, Geologie, Geomorphologie, digitales Höhenmodell, Neigung und Aspekt;
  • Unterteilung der Objekte in eine Vielzahl von Elementareinheiten (1, 1', 1", 2, 2', 2", 3, 3', 3", 4, 4', 4"), wobei jede der besagten Einheiten (1, 1', 1", 2, 2', 2", 3, 3', 3", 4, 4', 4") eine Vielzahl von persistenten Streuern und/oder verteilten Streuern umfasst;
  • Berechnung eines Kohärenzwerts für jeden der persistenten Streuer und/oder verteilten Streuer;
  • Berechnung eines ersten Mengenwerts für jeden der persistenten Streuer und/oder verteilten Streuer, wobei die besagte erste Menge vom Kohärenzwert abhängt;
  • Auswahl der Streuer mit einem ersten Mengenwert oberhalb eines festgelegten Schwellenwerts, wodurch für jede Elementareinheit (1, 1', 1", 2, 2', 2", 3, 3', 3", 4, 4', 4") ein Satz ausgewählter Streuer erhalten wird;
  • Berechnung mindestens einer Punktzahl für jede Elementareinheit (1, 1', 1", 2, 2', 2", 3, 3', 3", 4, 4', 4");
  • Bestimmung der Priorität der Überprüfung jeder Einheit (1, 1', 1", 2, 2', 2", 3, 3', 3", 4, 4', 4") durch Einstufen der Punktzahl der Einheiten (1, 1', 1", 2, 2', 2", 3, 3', 3", 4, 4', 4") und/oder durch Klassifizierung der Einheiten (1, 1', 1", 2, 2', 2", 3, 3', 3", 4, 4', 4") auf der Grundlage der Punktzahlen in Risikoklassen; und
  • Anzeige von Informationen über die Punktzahl jeder Einheit (1, 1', 1", 2, 2', 2", 3, 3', 3", 4, 4', 4") und/oder eines Ergebnisses der Bestimmung der Priorität der Überprüfung auf einer Ausgabevorrichtung;

**dadurch gekennzeichnet, dass** das Berechnung der Punktzahl Folgendes umfasst:

- Berechnung mindestens einer zweiten Menge in Abhängigkeit von der Verschiebung für jeden ausgewählten Streuer, um einen zweiten Mengenwert für jeden ausgewählten Streuer zu erhalten;
- Berechnung für jede Einheit (1, 1', 1", 2, 2', 2", 3, 3', 3", 4, 4', 4") eines Mittelwerts des zweiten Mengenwerts der ausgewählten Streuer innerhalb der Einheit (1, 1', 1", 2, 2', 2", 3, 3', 3", 4, 4', 4"), um einen zweiten Mengenmittelwert für jede Einheit (1, 1', 1", 2, 2', 2", 3, 3', 3", 4, 4', 4") zu erhalten; und
- Durchführung der folgenden Schritte:

• Berechnung eines Maximalwerts des zweiten Mengenmittelwerts der Einheiten, wodurch ein zweiter Mengenmittelwert-Maximalwert erhalten wird; und
• Teilung des zweiten Mengenmittelwerts jeder Einheit (1, 1', 1", 2, 2', 2", 3, 3', 3", 4, 4', 4") durch den zweiten Mengenmittelwert-Maximalwert, wodurch die Punktzahl erhalten wird;
oder
• Berechnung für jede Einheit (1, 1', 1", 2, 2', 2", 3, 3', 3", 4, 4', 4") des Absolutwerts der Differenz zwischen dem zweiten Mengenwert jedes ausgewählten Streuers innerhalb der Einheit (1, 1', 1", 2, 2', 2", 3, 3', 3", 4, 4', 4") und dem zweiten Mengenmittelwert jeder Einheit (1, 1', 1", 2, 2', 2", 3, 3', 3", 4, 4', 4"), um einen zweiten Mengendifferenzwert für jeden ausgewählten Streuer zu erhalten;
• Auswahl der ausgewählten Streuer mit dem zweiten Mengendifferenzwert, der höher als ein fester Schwellenwert ist, wodurch ein Satz von unterausgewählten Streuern für jede Elementareinheit (1, 1', 1", 2, 2', 2",3, 3', 3", 4, 4', 4") erhalten wird;
• Berechnung für jede Einheit (1, 1', 1", 2, 2', 2", 3, 3', 3", 4, 4', 4") eines Mittelwerts der zweiten Mengendifferenzwerte unter den unterausgewählten Streuern innerhalb der Einheit (1, 1', 1", 2, 2', 2", 3, 3',3", 4, 4', 4"), um einen zweiten Mengendifferenzmittelwert für jede Einheit (1, 1', 1", 2, 2', 2", 3, 3', 3", 4, 4', 4") zu erhalten;
• Berechnung eines Maximalwerts des zweiten Mengendifferenzmittelwerts der Einheiten (1, 1', 1", 2, 2', 2", 3, 3', 3", 4, 4', 4"), wodurch ein zweiter Mengendifferenzmittelwert-Maximalwert erhalten wird;
• Teilung des zweiten Mengendifferenzmittelwerts jeder Einheit (1, 1', 1", 2, 2', 2", 3, 3', 3", 4, 4', 4") durch den zweiten Mengendifferenzmittelwert-Maximalwert, wodurch ein zweites Mengendifferenzverhältnis erhalten wird;
• Berechnung eines Maximalwerts des zweiten Mengenmittelwerts der Einheiten (1, 1', 1", 2, 2', 2", 3, 3', 3", 4, 4', 4"), wodurch ein zweiter Mengenmittelwert-Maximalwert erhalten wird;
• Teilung des zweiten Mengenmittelwerts jeder Einheit (1, 1', 1", 2, 2', 2", 3, 3', 3", 4, 4', 4") durch den zweiten Mengenmittelwert-Maximalwert, wodurch ein zweites Mengenverhältnis erhalten wird;
• Summierung des zweiten Mengenverhältnisses und des zweiten Mengendifferenzverhältnisses, wodurch ein Summenwert erhalten wird; und
• Berechnung eines Verhältnisses zwischen dem Summenwert der Einheit (1, 1', 1", 2, 2', 2", 3, 3', 3", 4, 4', 4") und dem Maximalwert des Summenwerts der Elementareinheiten, wodurch die Punktzahl der Einheit (1, 1', 1", 2, 2', 2", 3, 3', 3", 4, 4', 4") erhalten wird.

**Revendications**

**1.** Système de détermination de la priorité d'inspection d'objets environnementaux et artificiels à la surface de la Terre, comprenant un dispositif arithmétique configuré pour exécuter :

- le traitement de l'importation de données de mesure de déplacement dérivées de mesures d'interférométrie multitemporelles de données SAR satellitaires sur les objets à surveiller ;
- le traitement de l'importation d'au moins un enregistrement de données d'information sur les objets, lesdites données d'information étant sélectionnées parmi le groupe comprenant : l'emplacement, la géométrie, le matériau, la taille, l'âge, la topologie, la fonction, les défaillances passées, les niveaux de service, les données de trafic, la géologie, la géomorphologie, le modèle numérique d'élévation, la pente et l'aspect ;
- le traitement de la subdivision des objets en une multitude d'unités élémentaires (1, 1', 1", 2, 2', 2", 3, 3', 3", 4, 4', 4"), chacune desdites unités (1, 1', 1", 2, 2', 2", 3, 3', 3", 4, 4', 4") comprenant une multitude de diffuseurs persistants et/ou de diffuseurs distribués ;
- le calcul d'une valeur de cohérence pour chacun des diffuseurs persistants et/ou des diffuseurs distribués ;
- le calcul d'une première valeur quantitative pour chacun des diffuseurs persistants et/ou des diffuseurs distribués, ladite première quantité dépendant de la valeur de cohérence ;
- le traitement de sélection des diffuseurs ayant une première valeur quantitative supérieure à un seuil fixe, obtenant ainsi un ensemble de diffuseurs sélectionnés pour chaque unité élémentaire (1, 1', 1", 2, 2', 2", 3, 3', 3", 4, 4', 4") ;
- le calcul d'au moins un score pour chaque unité élémentaire (1, 1', 1", 2, 2', 2", 3, 3', 3", 4, 4', 4");
- la détermination de la priorité d'inspection de chaque unité (1, 1', 1", 2, 2', 2", 3, 3', 3", 4, 4', 4") en classant le score des unités (1, 1', 1", 2, 2', 2", 3, 3', 3", 4, 4', 4") et/ou en classant les unités (1, 1', 1", 2, 2', 2", 3, 3', 3", 4,4', 4") en fonction des scores dans des classes de risque ; et
- le traitement de l'affichage des informations sur le score de chaque unité (1, 1', 1", 2, 2', 2", 3, 3', 3", 4, 4', 4") et/ou du résultat de la détermination de la priorité d'inspection sur un dispositif de sortie ;

**caractérisé par le fait que** le calcul du score comprend :

- le calcul d'au moins une seconde quantité dépendant du déplacement pour chaque diffuseur sélectionné afin d'obtenir une seconde valeur quantitative pour chaque diffuseur sélectionné ;
- le calcul, pour chaque unité (1, 1', 1", 2, 2', 2", 3, 3', 3", 4, 4', 4"), d'une moyenne de la seconde valeur quantitative des diffuseurs sélectionnés à l'intérieur de l'unité (1, 1', 1", 2, 2', 2", 3, 3', 3", 4,4', 4"), de manière à obtenir une moyenne de la seconde quantité pour chaque unité (1, 1', 1", 2, 2', 2", 3, 3', 3", 4, 4', 4") ; et
- l'exécution des étapes suivantes :

• calcul d'une valeur maximale des secondes moyennes quantitatives des unités (1, 1', 1", 2, 2', 2", 3, 3', 3", 4, 4', 4"), obtenant ainsi une seconde moyenne quantitative maximale ; et
• division de la seconde moyenne quantitative de chaque unité (1, 1', 1", 2, 2', 2", 3, 3', 3", 4, 4', 4") par la seconde moyenne quantitative maximale, obtenant ainsi le score ;

ou

• calcul, pour chaque unité (1, 1', 1", 2, 2', 2", 3, 3', 3", 4, 4', 4") de la valeur absolue de la différence entre la seconde valeur quantitative de chaque diffuseur sélectionné à l'intérieur de l'unité (1, 1', 1", 2 , 2', 2", 3, 3', 3", 4, 4', 4") et la moyenne de la seconde quantité de chaque unité (1, 1', 1", 2, 2', 2", 3, 3', 3", 4, 4', 4"), de manière à obtenir une seconde valeur de différence de quantité pour chaque diffuseur sélectionné ;
• sélection des diffuseurs sélectionnés ayant la seconde valeur de différence de quantité supérieure à un seuil fixe, obtenant ainsi un ensemble de diffuseurs sous-sélectionnés pour chaque unité élémentaire (1, 1', 1", 2, 2', 2", 3, 3', 3", 4, 4', 4") ;
• calcul, pour chaque unité (1, 1', 1", 2, 2', 2", 3, 3", 3", 4, 4', 4"), d'une moyenne des secondes valeurs de différence de quantité parmi les diffuseurs sous-sélectionnés à l'intérieur de l'unité (1, 1', 1", 2, 2', 2", 3, 3', 3", 4, 4', 4"), de manière à obtenir une moyenne de la différence de quantité pour chaque unité (1, 1', 1", 2, 2', 2", 3, 3', 3", 4, 4', 4") ;
• calcul d'une valeur maximale de la moyenne de la différence de la seconde quantité des unités (1, 1', 1", 2 , 2', 2", 3, 3', 3", 4, 4', 4"), obtenant ainsi une moyenne maximale de la différence de la seconde quantité ;
• division de la seconde moyenne de différence de quantité de chaque unité (1, 1', 1", 2, 2', 2", 3, 3', 3", 4, 4', 4") par la seconde moyenne maximale de différence de quantité, obtenant ainsi un second rapport de différence de quantité ;
• calcul d'une valeur maximale des secondes moyennes quantitatives des unités (1, 1', 1", 2, 2', 2", 3, 3', 3", 4, 4', 4"), obtenant ainsi une seconde moyenne quantitative maximale ;
• division de la seconde moyenne quantitative de chaque unité (1, 1', 1", 2, 2', 2", 3, 3', 3", 4, 4', 4") par la seconde moyenne quantitative maximale, obtenant ainsi un second rapport quantitatif ;
• somme du second rapport quantitatif et du second rapport de différence quantitative, obtenant ainsi une valeur de somme ; et
• calcul d'un rapport entre la valeur somme de l'unité (1, 1', 1", 2, 2', 2", 3, 3', 3", 4, 4', 4") et la valeur maximale de la valeur de somme parmi les unités élémentaires (1, 1', 1", 2, 2', 2", 3, 3', 3", 4, 4', 4"), obtenant ainsi le score de l'unité (1, 1', 1", 2, 2', 2", 3, 3', 3", 4, 4', 4").

2. Système selon la revendication 1, dans lequel la valeur de la première quantité *(NC)* d'un diffuseur est donnée par l'équation suivante, si la valeur de cohérence de ce diffuseur est supérieure à un seuil de cohérence (SC) *:*

$$NC = 0.5 + 0.5 * \frac{Coh - SC}{1 - SC}$$

où *Coh* est la valeur de cohérence du diffuseur et *SC* est le seuil de cohérence ; ou par l'équation suivante, si la valeur de cohérence de ce diffuseur est inférieure au seuil de cohérence (*SC*) et est différente de la valeur de cohérence minimale ($Coh_{min}$) des diffuseurs à l'intérieur de l'unité (1, 1', 1", 2, 2', 2", 3, 3', 3", 4, 4', 4") :

$$NC = 0.5 + 0.5 * \frac{SC - Coh}{SC - Coh_{min}}$$

où *Coh* est la valeur de cohérence du diffuseur, SC est le seuil et $Coh_{min}$ est la valeur de cohérence minimale des diffuseurs à l'intérieur de l'unité (1, 1', 1", 2, 2", 2", 3, 3', 3", 4, 4', 4") ; ou par l'équation suivante si la valeur de cohérence de ce diffuseur est nulle :

$$NC = 0$$

ou par l'équation suivante, si la valeur de cohérence de ce diffuseur est égale au seuil de cohérence :

$$NC = 0.5$$

**3.** Système selon la revendication 1 ou 2, dans lequel ledit seuil fixe est compris entre 0,4 et 0,6.

**4.** Système selon l'une des revendications 1 à 3, dans lequel la seconde quantité pour chaque diffuseur sélectionné est la vitesse de ce diffuseur.

**5.** Système selon l'une des revendications 1 à 3, dans lequel la seconde quantité pour chaque diffuseur sélectionné est un produit de la vitesse de ce diffuseur et de la densité des diffuseurs sélectionnés de l'unité élémentaire (1, 1', 1", 4, 4', 4") contenant ce diffuseur.

**6.** Système selon l'une des revendications 1 à 3, dans lequel la seconde quantité est un produit de la vitesse de ce diffuseur et de la densité des diffuseurs qui appartiennent à un sous-ensemble des diffuseurs sélectionnés dans l'unité élémentaire (1, 1', 1", 4, 4', 4") contenant ce diffuseur.

**7.** Système selon la revendication 6, dans lequel le sous-ensemble comprend uniquement les diffuseurs sélectionnés ayant une vitesse supérieure à la vitesse moyenne dans cette unité (1, 1', 1", 4, 4', 4") d'un seuil de vitesse donné.

**8.** Système selon l'une des revendications 1 à 3, dans lequel la seconde quantité pour chaque diffuseur sélectionné est l'accélération de ce diffuseur.

**9.** Système selon la revendication 6, dans lequel l'objet est une infrastructure linéaire et l'unité élémentaire (1, 1', 1") est une zone entourant un segment de l'infrastructure.

**10.** Système selon l'une des revendications 1 à 8, dans lequel l'objet est une infrastructure ponctuelle et l'unité élémentaire (3, 3', 3") est une zone circulaire centrée sur un point de l'infrastructure.

**11.** Système selon l'une des revendications 1 à 6, dans lequel l'objet est une infrastructure polygonale et l'unité élémentaire (2, 2', 2") est une zone entourant un polygone de l'infrastructure.

**12.** Système selon l'une des revendications 1 à 6, dans lequel l'objet est un territoire et l'unité élémentaire (4, 4', 4") est une zone de forme circulaire ou polygonale, la pluralité d'unités élémentaires (4, 4', 4") formant une grille couvrant le territoire.

**13.** Système selon l'une des revendications précédentes, dans lequel les classes de risque sont :

- risque élevé, si le score est supérieur à un seuil de score supérieur ;
- risque intermédiaire, si le score est compris entre un seuil de score inférieur et le seuil de score supérieur ; et
- risque faible, si le score est inférieur au seuil de score inférieur.

**14.** Système selon l'une des revendications précédentes, dans lequel le dispositif arithmétique est configuré pour déterminer la priorité d'inspection de chaque unité (1, 1', 1", 2, 2', 2", 3, 3', 3", 4, 4', 4") en classant les unités (1, 1', 1", 2, 2', 2", 3, 3', 3", 4, 4', 4") en fonction des scores, au moyen d'un algorithme de réseau neuronal utilisant les scores des unités (1, 1', 1", 2, 2', 2", 3, 3', 3", 4, 4', 4") comme entrée.

**15.** Système selon la revendication 13 ou 14, dans lequel l'affichage d'informations comprend l'affichage des scores et/ou des classes de risque de chaque unité (1, 1', 1", 2, 2', 2", 3, 3', 3", 4, 4', 4").

**16.** Système selon la revendication précédente, dans lequel le traitement des informations d'affichage comprend la cartographie en couleurs des scores et/ou des classes de risque de chaque unité (1, 1', 1", 2, 2', 2", 3, 3', 3", 4, 4', 4") sur des images satellite de l'objet.

**17.** Procédé pour déterminer la priorité d'inspection d'objets environnementaux et artificiels, comprenant :

- l'exécution, au moyen d'un dispositif arithmétique, des étapes suivantes :

  • importation de données de mesure de déplacement dérivées de mesures d'interférométrie multitemporelles de données SAR satellitaires sur les objets à surveiller ;
  • importation d'au moins un enregistrement de données d'information sur les objets, lesdites données d'information étant sélectionnées parmi le groupe comprenant : l'emplacement, la géométrie, le matériau, la taille, l'âge, la topologie, la fonction, les défaillances passées, les niveaux de service, les données de trafic, la géologie, la géomorphologie, le modèle numérique d'élévation, la pente et l'aspect ;

• subdivision des objets en une multitude d'unités élémentaires (1, 1', 1", 2, 2', 2", 3, 3', 3", 4, 4', 4"), chacune desdites unités (1, 1', 1", 2, 2', 2", 3, 3", 3", 4, 4', 4") comprenant une multitude de diffuseurs persistants et/ou de diffuseurs distribués ;

• calcul d'une valeur de cohérence pour chacun des diffuseurs persistants et/ou des diffuseurs distribués ;

• calcul d'une première valeur quantitative pour chacun des diffuseurs persistants et/ou des diffuseurs distribués, ladite première quantité dépendant de la valeur de cohérence ;

• sélection des diffuseurs ayant une première valeur quantitative supérieure à un seuil fixe, obtenant ainsi un ensemble de diffuseurs sélectionnés pour chaque unité élémentaire (1, 1', 1", 2, 2', 2", 3, 3', 3", 4, 4', 4") ;

• calcul d'au moins un score pour chaque unité élémentaire (1, 1', 1", 2, 2', 2", 3, 3', 3", 4, 4', 4") ;

• détermination de la priorité d'inspection de chaque unité (1, 1', 1", 2, 2', 2", 3, 3', 3", 4, 4', 4") en classant le score des unités (1, 1', 1", 2 , 2', 2", 3, 3', 3", 4, 4', 4") et/ou en classant les unités (1, 1', 1", 2 , 2', 2", 3, 3', 3", 4, 4', 4") en fonction des scores dans des classes de risque ; et

• affichage d'informations sur le score de chaque unité (1, 1', 1", 2, 2', 2", 3, 3', 3", 4, 4', 4") et/ou d'un résultat de la détermination de la priorité d'inspection ;

**caractérisé par le fait que** le calcul du score comprend :

- le calcul d'au moins une seconde quantité dépendant du déplacement pour chaque diffuseur sélectionné afin d'obtenir une seconde valeur quantitative pour chaque diffuseur sélectionné ;
- le calcul, pour chaque unité (1, 1', 1", 2, 2', 2", 3, 3', 3", 4, 4', 4"), d'une moyenne de la seconde valeur quantitative des diffuseurs sélectionnés à l'intérieur de l'unité (1, 1', 1", 2, 2', 2", 3, 3', 3", 4,4', 4"), de manière à obtenir une moyenne de la seconde quantité pour chaque unité (1, 1', 1", 2, 2', 2", 3, 3', 3", 4, 4', 4") ; et
- l'exécution des étapes suivantes :

• calcul d'une valeur maximale de la seconde moyenne quantitative des unités, obtenant ainsi une seconde moyenne quantitative maximale ; et

• division de la seconde moyenne quantitative de chaque unité (1, 1', 1", 2, 2', 2", 3, 3', 3", 4, 4', 4") par la seconde moyenne quantitative maximale, obtenant ainsi le score ;

ou

• calcul, pour chaque unité (1, 1', 1", 2 , 2', 2", 3, 3', 3", 4, 4', 4") de la valeur absolue de la différence entre la valeur de la seconde quantité de chaque diffuseur sélectionné à l'intérieur de l'unité (1, 1', 1", 2 , 2', 2", 3, 3', 3", 4, 4', 4") et de la moyenne de la seconde quantité de chaque unité (1, 1', 1", 2, 2', 2", 3, 3', 3", 4, 4', 4"), de manière à obtenir une valeur de différence de seconde quantité pour chaque diffuseur sélectionné ;

• sélection des diffuseurs sélectionnés ayant la seconde valeur de différence quantitative supérieure à un seuil fixe, obtenant ainsi un ensemble de diffuseurs sous-sélectionnés pour chaque unité élémentaire (1, 1', 1", 2, 2', 2", 3, 3', 3", 4, 4', 4") ;

• calcul, pour chaque unité (1, 1', 1", 2 , 2', 2", 3, 3', 3", 4, 4', 4"), d'une moyenne des secondes valeurs de différence de quantité parmi les diffuseurs sous-sélectionnés à l'intérieur de l'unité (1, 1', 1", 2 , 2', 2", 3, 3', 3", 4, 4', 4"), de manière à obtenir une moyenne de la différence de quantité pour chaque unité (1, 1', 1", 2, 2', 2", 3, 3', 3", 4, 4', 4") ;

• calcul d'une valeur maximale de la seconde moyenne de différence de quantité des unités (1, 1', 1", 2, 2', 2", 3, 3', 3", 4, 4', 4"), obtenant ainsi un second maximum de moyenne de différence de quantité ;

• division de la seconde moyenne de différence de quantité de chaque unité (1, 1', 1", 2, 2', 2", 3, 3', 3", 4, 4', 4") par la seconde moyenne maximale de différence de quantité, obtenant ainsi un second rapport de différence de quantité ;

• calcul d'une valeur maximale des secondes moyennes quantitatives des unités (1, 1', 1", 2 , 2', 2", 3, 3', 3", 4, 4', 4"), obtenant ainsi une seconde moyenne quantitative maximale ;

• division de la seconde moyenne quantitative de chaque unité (1, 1', 1", 2, 2', 2", 3, 3', 3", 4, 4', 4 ") par la seconde moyenne quantitative maximale, obtenant ainsi un second rapport quantitatif ;

• somme du second rapport de quantité et du second rapport de différence de quantité, obtenant ainsi une valeur de somme ; et

• calcul d'un rapport entre la valeur de somme de l'unité (1, 1', 1", 2, 2', 2", 3, 3', 3", 4, 4', 4") et la valeur maximale de la valeur somme parmi les unités élémentaires, obtenant ainsi le score de l'unité (1, 1', 1", 2, 2', 2", 3, 3', 3", 4, 4', 4").

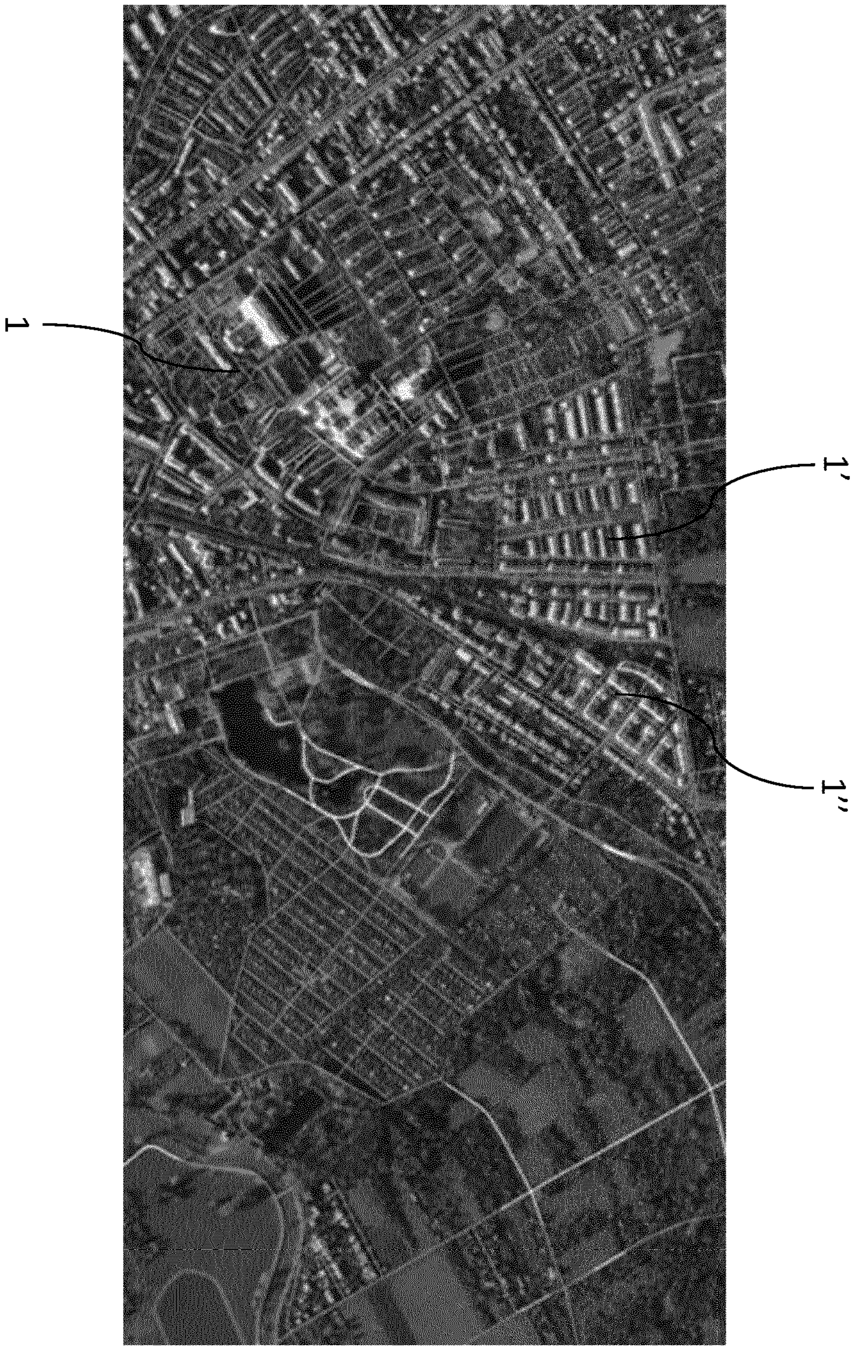


Fig.1

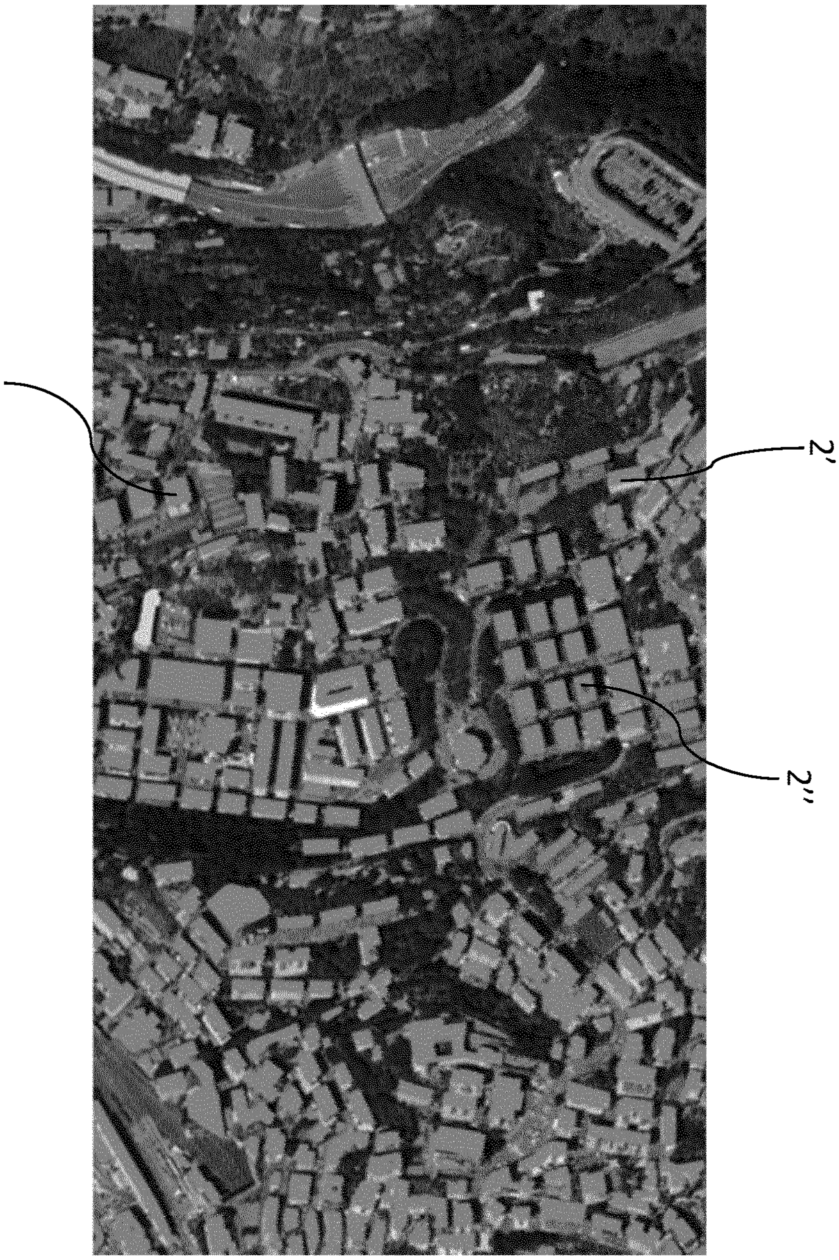


Fig.2

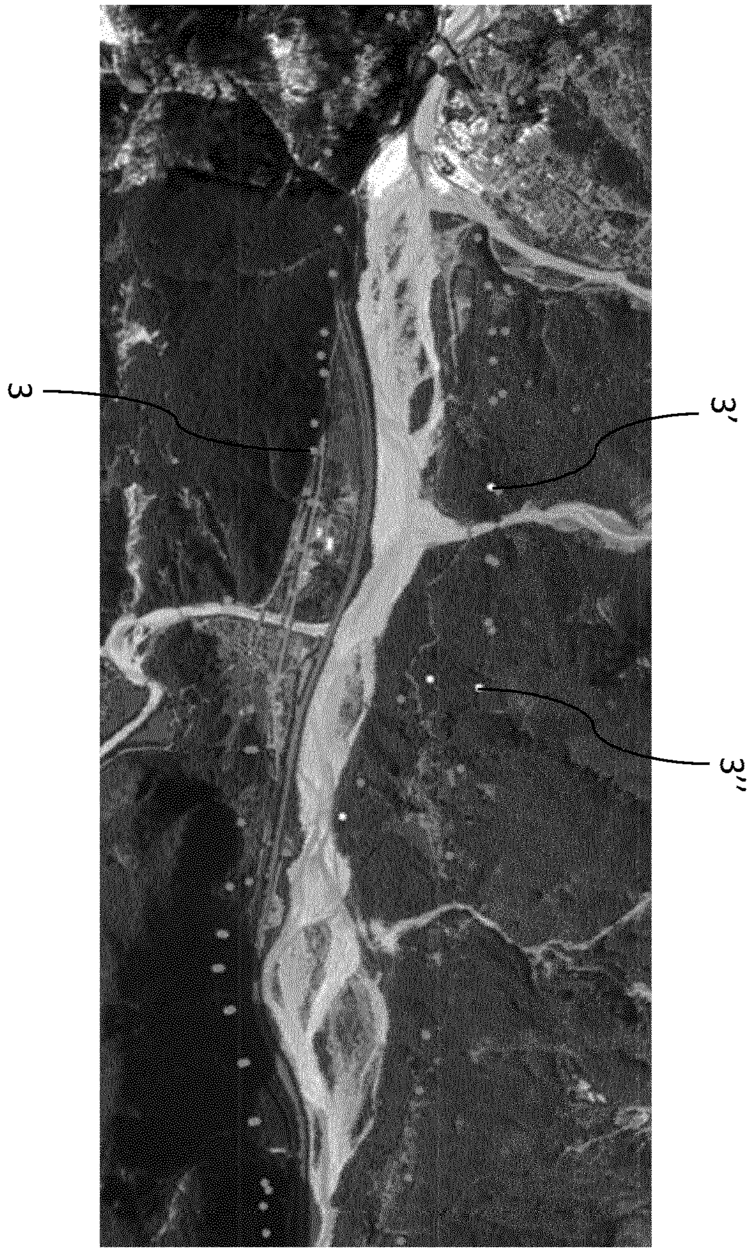


Fig.3

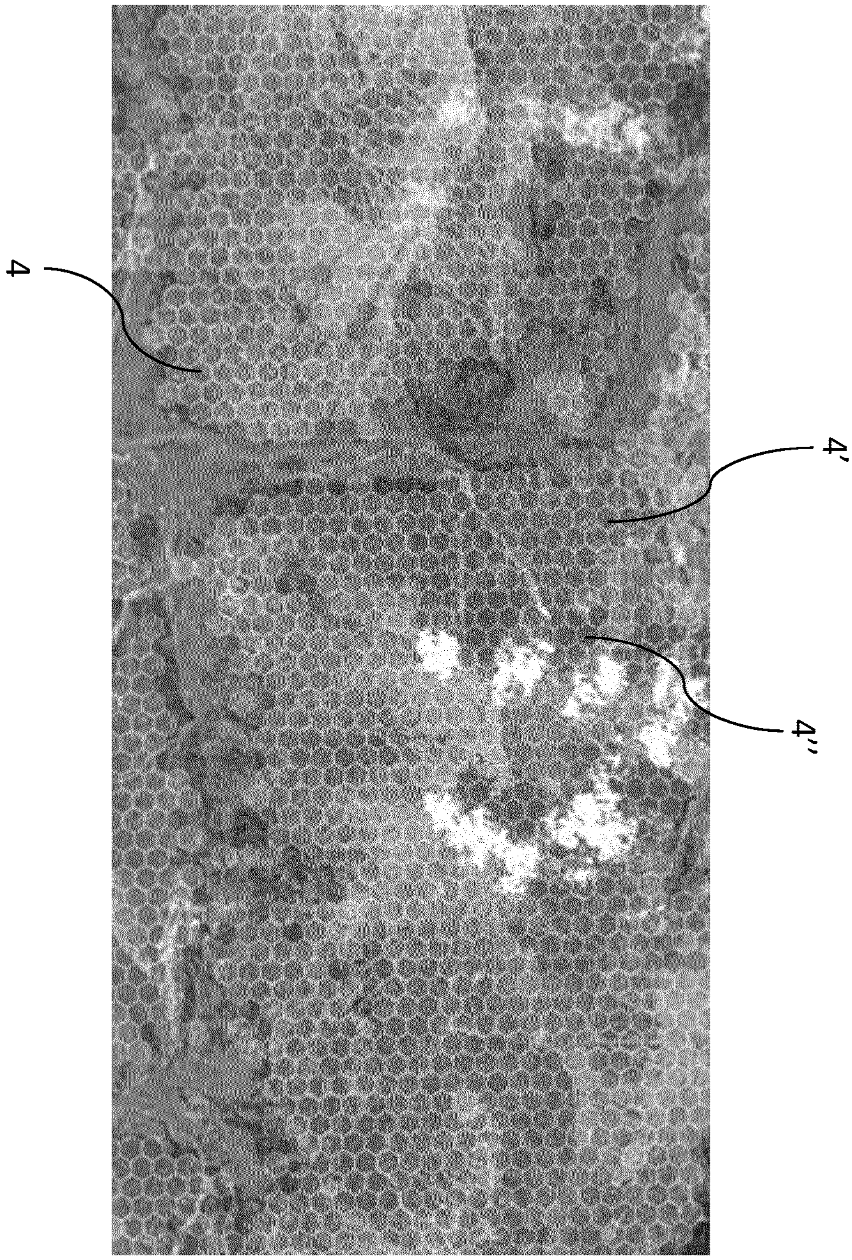


Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109991601 A


### Non-patent literature cited in the description


- Empirical fragility and vulnerability curves for buildings exposed to slow-moving landslides at medium and large scales. **PEDUTO D et al.** Landslides. Springer, 13 April 2017, vol. 14
- Slow-moving landslides interacting with the road network: Analysis of damage using ancillary data, in situ surveys and multi-source monitoring data.. **NAPPO N. et al.** Engineering Geology. Elsevier Science Publishers, 30 July 2019, vol. 260
- **PRATESI F. et al.** Rating health and stability of engineering structures via classification indexes of InSAR Persistent Scatterers. *International Journal of Applied Earth Observation and Geoinformation*, 22 April 2015, vol. 40, 81-90
- **PEDUTO D et al.** Analysis of damage to buildings in urban centers on unstable slopes via TerraSAR-X PSI data: the case Study of El Papiol Town (Spain). *IEEE Geoscience and Remote Sensing Letters*, 01 November 2019, vol. 16 (111)
- **AMODIO ANGELO et al.** Rheticus Network Alert supporting critical infrastructures: a case study for ACEA - utility operator - within SCIRES project. *12° Themed Remote Sensing Workshop - The role of Copernicus Sentinel data in knowledge processes and land management: state of art of technology processes and land management: state of the art of technology transfer to the operational sector - Extended abstracts*, 25 June 2019, ISBN 978-88-82863-77-7, 1-69
- **BOVENGA, FABIO** ; **REFICE, ALBERTO** ; **NUTRICATO, RAFFAELE** ; **GUERRIERO, LUCIANO** ; **CHIARADIA, MT.** SPINUA: a flexible processing chain for ERS/ENVISAT long term interferometry. *Proceedings of ESA-ENVISAT Symposium, Salzburg, Austria*, 2005, 6-10